# EUROPEAN PATENT APPLICATION

(11) **EP 4 838 879 A1**
(43) Date of publication of application: **11.11.2026**
(21) Application number: 24915522.7
(22) Date of filing: 19.11.2024
(51) Int. Cl.: H04N 13/156, H04N 13/128, H04N 13/239, H04N 13/344, G06T 7/11, G06T 7/30, H04N 13/122

(54) **ELECTRONIC DEVICE FOR PERFORMING VIEW SYNTHESIS, AND OPERATING METHOD THEREOF**

(30) Priority: 05.01.2024 KR 20240002459; 21.05.2024 KR 20240065857
(71) Applicant: Samsung Electronics Co., Ltd., Suwon-si, Gyeonggi-do 16677 (KR)
(72) Inventor: KIM, Hyokak, Suwon-si, Gyeonggi-do 16677 (KR); JEONG, Jaeyun, Suwon-si, Gyeonggi-do 16677 (KR); WON, Seungjae, Suwon-si, Gyeonggi-do 16677 (KR)
(74) Representative: Appleyard Lees IP LLP
(86) International application number: PCT/KR2024/018275
(87) International publication number: WO 2025/146939

(57) **Abstract**

An electronic device for performing view synthesis, and an operating method thereof are provided. The electronic device of the present disclosure: uses a plurality of cameras disposed to be spaced a first baseline apart from each other, so as to photograph an object, thereby acquiring a stereo image including a first image and a second image; on the basis of the positional relationship between the plurality of cameras according to a capturing direction, or positional information of a main object disposed in the image, determines, from among the first image and the second image, a reference image and an image to be synthesized; performs view synthesis on the image to be synthesized that is determined on the basis of the depth information of the object, so as to acquire a synthesized image including the object with a depth value according to a disparity corresponding to a second baseline that is the distance between a left-eye display and a right-eye display of an external device; and can transmit the reference image and the synthesized image to the external device so that the reference image and the synthesized image are displayed by the external device.

## Description

### Technical Field

The present disclosure relates to an electronic device for performing view synthesis and an operating method thereof. In particular, the present disclosure discloses an electronic device for performing stereo view synthesis to display, through an external device, image content such as an image or a video captured by using a stereo camera, and an operating method thereof.

### Background Art

Virtual reality (VR) refers to a specific environment or situation, or the technology itself, which is similar to reality but is not real, generated by artificial technology. As a device that enables a user to experience virtual reality, there is, for example, a head-mounted display (HMD) device. Among HMD devices, a see-through HMD device may allow a user to view the real world and augment a virtual object onto the real world so as to improve user experience.

Augmented reality (AR) is a technology that overlays and shows a virtual image on a physical environment space or a real-world object in the real world. AR devices utilizing AR technology include, for example, AR glasses, and the like. AR glasses are usefully used in everyday life, such as for information retrieval, navigation, and image capture. In particular, among AR glasses, smart glasses are worn as a fashion item and are mainly used for outdoor activities.

A user may view image content by displaying the image content, such as an image or a video captured using a mobile device such as a smartphone, through a VR device such as an HMD device or an AR device. When viewing image content through a VR device, for example, an HMD device, a user is not able to feel the sense of depth of a real-world object from the image content because the distance between cameras of a mobile device that is a baseline is less than a baseline between a left-eye display and a right-eye display of the HMD device.

When viewing image content through a VR device such as an HMD device or an AR device, it is necessary to perform stereo view synthesis in which a baseline between cameras is changed according to a distance between the left eye and the right eye in order to make a user feel the sense of depth similar to that of a real-world object. Stereo view synthesis is an image processing method of synthesizing an object in an image by using depth information of the object, and when stereo view synthesis is performed, a difference in depth values may occur due to a change in the baseline, and distortion such as artifacts may occur in the image due to the difference in depth values.

### Disclosure of Invention

### Solution to Problem

According to an aspect of the present disclosure, provided is an electronic device that performs view synthesis. According to an embodiment of the present disclosure, an electronic device may include a plurality of cameras arranged to be spaced apart from each other by a first baseline, a communication interface configured to perform data communication with an external device, a processor including processing circuitry, and memory storing one or more instructions. The one or more instructions, when executed by at least one processor individually or collectively, may cause the electronic device to obtain a first image and a second image by photographing an object by using a plurality of cameras. The one or more instructions, when executed by the at least one processor individually or collectively, may cause the electronic device to select a reference image among the first image and the second image, based on a positional relationship of the plurality of cameras according to a photographing direction of a user when photographing the object or position information of a main object arranged in an image. The one or more instructions, when executed by the at least one processor individually or collectively, may cause the electronic device to determine, as a synthesis target image, a remaining image that is not selected as the reference image among the first image and the second image. The one or more instructions, when executed by the at least one processor individually or collectively, may cause the electronic device to perform view synthesis on the synthesis target image, based on depth information of the object, and obtain a synthesized image including an object having a depth value according to a disparity corresponding to a second baseline that is a distance between a left-eye display and a right-eye display of an external device. The one or more instructions, when executed by the at least one processor individually or collectively, may cause the electronic device to control the communication interface to transmit the reference image and the synthesized image to the external device so that the reference image and the synthesized image are displayed by the external device.

According to an aspect of the present disclosure, provided is a method, performed by an electronic device, of performing view synthesis. According to an embodiment of the present disclosure, an operating method of an electronic device may include obtaining a stereo image including a first image and a second image by photographing an object by using a plurality of cameras spaced apart from each other by a first baseline. According to an embodiment of the present disclosure, the operating method of the electronic device may include selecting a reference image among the first image and the second image, based on a positional relationship of the plurality of cameras according to a photographing direction of a user when photographing the object or position information of a main object arranged in an image. According to an embodiment of the present disclosure, the operating method of the electronic device may include determining, as a synthesis target image, a remaining image that is not selected as the reference image among the first image and the second image. According to an embodiment of the present disclosure, the operating method of the electronic device may include performing view synthesis on the synthesis target image based on depth information of the object and obtaining a synthesized image including an object having a depth value according to a disparity corresponding to a second baseline that is a distance between a left-eye display and a right-eye display of an external device. According to an embodiment of the present disclosure, the operating method of the electronic device may include transmitting the reference image and the synthesized image to the external device so that the reference image and the synthesized image are displayed by the external device.

According to an aspect of the present disclosure, provided is a head mounted display (HMD) device that performs view synthesis. According to an embodiment of the present disclosure, the HMD device may include a communication interface configured to perform pairing with an external device and perform data communication with the external device, a left-eye display and a right-eye display which are spaced apart from each other by a baseline, at least one processor including processing circuitry, and memory storing one or more instructions. The one or more instructions, when executed by the at least one processor individually or collectively, may cause the HMD device to control the communication interface to receive a stereo image including a first image and a second image obtained by a plurality of cameras included in the external device. The one or more instructions, when executed by the at least one processor individually or collectively, may cause the HMD device to select a reference image among the first image and the second image, based on at least one of a positional relationship of the plurality of cameras according to a photographing direction of the external device, a dominant eye of a user, or position information of a main object arranged in an image. The one or more instructions, when executed by the at least one processor individually or collectively, may cause the HMD device to determine, as a synthesis target image, a remaining image that is not selected as the reference image aming the first image and the second image. The one or more instructions, when executed by the at least one processor individually or collectively, may cause the HMD device to obtain a synthesized image including an object having a depth value different from a disparity corresponding to a baseline by performing view synthesis on the synthesis target image based on depth information of the object. The one or more instructions, when executed by the at least one processor individually or collectively, may cause the HMD device to display the reference image and the synthesized image through the left-eye display and the right-eye display.

### Brief Description of Drawings

The present disclosure may be easily understood as a combination of the following detailed description and accompanying drawings, wherein reference numerals refer to structural elements.
FIG. 1 is a conceptual diagram illustrating an operation in which an electronic device displays, through an external device, a stereo image obtained by photographing an object.
FIG. 2 is a flowchart illustrating a method, performed by an electronic device, of performing view synthesis on a stereo image, according to an embodiment of the present disclosure.
FIG. 3 is a diagram illustrating an operation in which an electronic device performs view synthesis on a stereo image, according to an embodiment of the present disclosure.
FIG. 4 is a block diagram illustrating components of an electronic device according to an embodiment of the present disclosure.
FIG. 5 is a flowchart illustrating a method, performed by an electronic device, of selecting a reference image from a stereo image based on a photographing direction and arrangement information of a plurality of cameras, according to an embodiment of the present disclosure.
FIG. 6A is a diagram illustrating an embodiment in which an electronic device of the present disclosure selects a right image from a stereo image as a reference image based on a photographing direction and arrangement information of a plurality of cameras, determines a left image as a synthesis target image, and performs view synthesis on the synthesis target image.
FIG. 6B is a diagram illustrating an embodiment in which an electronic device of the present disclosure selects a left image from a stereo image as a reference image based on a photographing direction and arrangement information of a plurality of cameras, determines a right image as a synthesis target image, and performs view synthesis on the synthesis target image.
FIG. 7 is a flowchart illustrating a method, performed by an electronic device, of selecting a reference image based on position information of a main object in an image, according to an embodiment of the present disclosure.
FIG. 8 is a diagram illustrating an operation in which an electronic device recognizes a main object from an image by using an original image, a segmentation image, and a depth map image, according to an embodiment of the present disclosure.
FIG. 9A is a diagram illustrating an embodiment in which an electronic device of the present disclosure determines a synthesis target image based on position information of a main object recognized in an image and performs view synthesis on the synthesis target image.
FIG. 9B is a diagram illustrating an embodiment in which an electronic device of the present disclosure determines a synthesis target image based on position information of a main object recognized in an image and performs view synthesis on the synthesis target image.
FIG. 10 is a diagram illustrating disparity in an original stereo image and disparity in a stereo image after view synthesis is performed.
FIG. 11 is a diagram illustrating a stereo image according to a result of performing, by an electronic device, view synthesis on an original stereo image according to an embodiment of the present disclosure.
FIG. 12 is a conceptual diagram illustrating an operation in which an electronic device performs view synthesis according to a synthesis target image, according to an embodiment of the present disclosure.
FIG. 13 is a block diagram illustrating components of a head-mounted display (HMD) device according to an embodiment of the present disclosure.
FIG. 14 is a flowchart illustrating a method, performed by an HMD device, of performing view synthesis on a stereo image, according to an embodiment of the present disclosure.
FIG. 15 is a flowchart illustrating an operating method of an electronic device and a HMD device according to an embodiment of the present disclosure.
FIG. 16 is a flowchart illustrating a method, performed by a HMD device, of selecting a reference image for view synthesis based on a dominant eye of a user, according to an embodiment of the present disclosure.
FIG. 17 is a diagram illustrating an operation in which a HMD device determines a dominant eye of a user by displaying a simulation image, according to an embodiment of the present disclosure.

### Mode of the Invention

Although the terms used in embodiments of the present specification are selected from among common terms that are currently widely used in consideration of their functions in the disclosure, the terms may vary according the intention of one of ordinary skill in the art, a precedent, or the advent of new technology. Also, in particular cases, the terms are discretionally selected by the applicant of the present disclosure, and the meaning of those terms will be described in detail in the corresponding part of the detailed description. Therefore, the terms used in the present specification are not merely designations of the terms, but the terms are defined based on the meaning of the terms and content throughout the present disclosure.

As used herein, the singular forms "a," "an," and "the" may include the plural forms as well, unless the context clearly indicates otherwise. All the terms used in the present specification, including technical and scientific terms, may have the same meanings as those generally understood by one of skill in the art of the present disclosure.

Throughout the present disclosure, when a part "includes" or "comprises" an element, unless there is a particular description contrary thereto, the part can further include other elements, not excluding the other elements. In addition, the terms such as "... unit," "module," or the like used in the disclosure indicate a unit, which processes at least one function or operation, and the unit may be implemented by hardware or software, or by a combination of hardware and software.

The expression "configured to (or set to)" used in the present disclosure may be replaced with, for example, "suitable for," "having the capacity to," "designed to," "adapted to," "made to," or "capable of" according to cases. The expression "configured to (or set to)" may not necessarily mean "specifically designed to" in a hardware level. Instead, in some cases, the expression "system configured to ..." may mean that the system is "capable of ..." along with other devices or parts. For example, a "processor configured to (or set to) perform A, B, and C" may refer to a dedicated processor (e.g., an embedded processor) for performing a corresponding operation or a generic-purpose processor (e.g., a central processing unit (CPU) or an application processor) capable of performing corresponding operations by executing one or more software programs stored in memory.

Also, in the present disclosure, it should be understood that when elements are "connected" or "coupled" to each other, the elements may be directly connected or coupled to each other, but may alternatively be connected or coupled to each other with an element therebetween, unless specified otherwise.

All functions or operations described in the present disclosure may be processed by one processor or a combination of a plurality of processors. One processor or a combination of a plurality of processors may be circuitry that performs processing, and may include an application processor (AP), a communication processor (CP), a graphical processing unit (GPU), a neural processing unit (NPU), a microprocessor unit (MPU), a system on chip (SoC), an integrated chip (IC), or the like.

It should be understood that the blocks in the flowchart and combinations of the flowcharts shown in the present disclosure may be performed by one or more computer programs including computer-executable instructions. The one or more computer programs may be all stored in single memory, or may be divided and stored in multiple different memories.

In the present disclosure, "view synthesis" refers to image processing in which a depth value of an object is changed and synthesized to have the same depth value as when the object is photographed at a desired camera position, by using an image (e.g., an RGB image) and depth information (e.g., a depth map image) of the object. In an embodiment of the present disclosure, view synthesis may refer to stereo view synthesis in which a depth value of an object in an image is changed by adjusting a disparity between matched pixels of each of a plurality of images constituting a stereo image, and the object of which the depth value is changed is synthesized with a background.

In the present disclosure, "stereo view synthesis" refers to image processing of shifting an object included in any one of a left image and a right image constituting a stereo image, based on a depth value of the object and synthesizing the shifted object with a background. In an embodiment of the present disclosure, the stereo view synthesis may be performed by selecting any one image selected from the left image and the right image as a reference image and targeting the remaining image not selected as the reference image.

Hereinafter, embodiments of the present disclosure will be described in detail with reference to the accompanying drawings to allow one of skill in the art to easily implement the embodiment. However, the present disclosure may be implemented in various different forms and is not limited to the embodiments described herein.

Hereinafter, embodiments of the present disclosure will be described in detail with reference to the drawings.

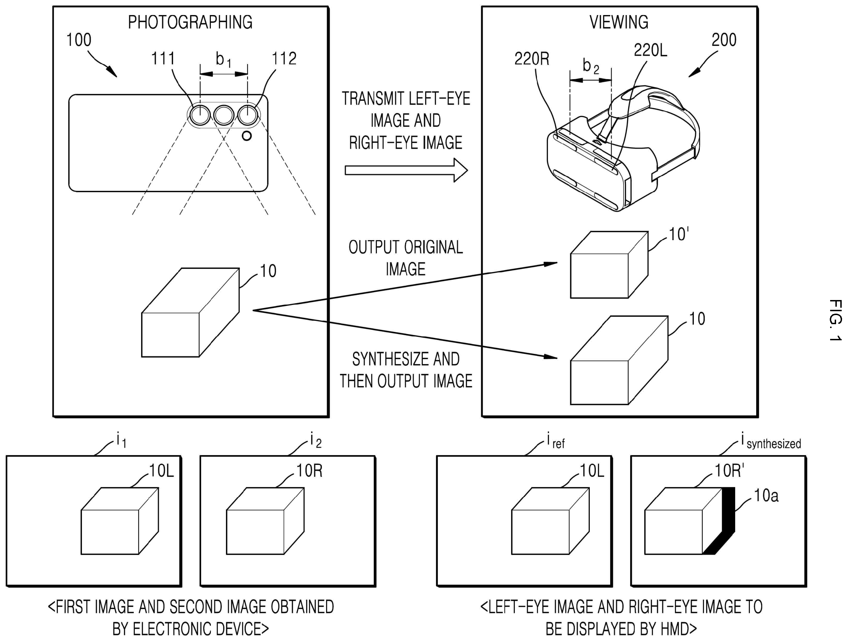

FIG. 1 is a conceptual diagram illustrating an operation in which an electronic device 100 displays, through an external device 200, stereo images i₁ and i₂ obtained by photographing an object.

The electronic device 100 may be a smart phone or a tablet PC including a plurality of cameras 111 and 112. However, the present disclosure is not limited thereto, and the electronic device 100 may be implemented as, for example, a mobile device such as a laptop computer, a digital camera, an electronic book terminal, a digital broadcasting terminal, a personal digital assistant (PDA), a portable multimedia player (PMP), a navigation device, or an MP3 player.

Referring to FIG. 1, the electronic device 100 may obtain the plurality of images i₁ and i₂ by photographing an object 10 through the plurality of cameras 111 and 112. In an embodiment of the present disclosure, the plurality of cameras 111 and 112 may be implemented as stereo cameras configured to capture a stereo image. The plurality of cameras 111 and 112 may be arranged to be spaced apart from each other by a first baseline b₁ on the electronic device 100. The first baseline b₁ may be, for example, 1.5 centimeters (cm), but is not limited thereto. The electronic device 100 may obtain the first image i₁ by photographing the object 10 by using the first camera 111, and may obtain the second image i₂ by photographing the object 10 by using the second camera 112. The electronic device 100 may transmit the obtained first image i₁ and second image i₂ to the external device 200.

The external device 200 may include an augmented reality (AR) device or a virtual reality (VR) device. The external device 200 may be implemented as, for example, a head-mounted display device. In the present disclosure, a "head-mounted display (HMD) device" is a device worn on a user's head and provides a virtual reality experience to the user. However, the present disclosure is not limited thereto, and the external device 200 may be implemented as, for example, an AR helmet providing an AR experience, a face mounted display (FMD) device worn on a user's face, or AR glasses in the form of glasses.

Hereinafter, it will be described that the external device 200 is implemented as a HMD device.

The HMD device 200 may display the first image i₁ and the second image i₂ received from the electronic device 100. The HMD device 200 may include a left-eye display 220L and a right-eye display 220R, may display the first image i₁ through the left-eye display 220L, and may display the second image i₂ through the right-eye display 220R. In this case, the first image i₁ may be a left-eye image, and the second image i₂ may be a right-eye image.

In the HMD device 200, the left-eye display 220L and the right-eye display 220R may be arranged to be spaced apart from each other by a second baseline b₂. In an embodiment of the present disclosure, the second baseline b₂ may be an average value of a distance between the left eye and the right eye of a person. For example, the second baseline b₂ may be 6.5 cm. However, the present disclosure is not limited thereto.

The first baseline b₁, which is the distance between the plurality of cameras 111 and 112 arranged in the electronic device 100, is relatively less than the second baseline b₂, which is the distance between the plurality of displays 220L and 220R of the HMD device 200. When the electronic device 100 transmits the first image i₁ and the second image i₂ in the original image state to the HMD device 200 without synthesizing the images, the depth value of the object 10 stereoscopically displayed by the left-eye image and the right-eye image may be changed due to the change of the disparity. As shown in FIG. 1, an object 10' displayed by the HMD device 200 through the left-eye display 220L and the right-eye display 220R has a depth value different from the depth value by the first image i₁ and the second image i₂ captured by the electronic device 100, and a user may feel the sense of depth weakly.

When the electronic device 100 performs view synthesis so that depth values of an object of the first image i₁ and the second image i₂ have depth values according to the disparity corresponding to the second baseline b₂, and transmits a synthesized image to the HMD device 200, the object 10 displayed by the HMD device 200 may have a depth value that is the same as or similar to the depth value of the object 10 captured by the electronic device 100. However, due to the view synthesis, image distortion such as artifacts may occur.

Referring to FIG. 1, the electronic device 100 may select, as a reference image, the first image i₁ that is a left image among the first image i₁ and the second image i₂ which configure a stereo image and may select the second image i₂ that is a right image as a synthesis target image. The electronic device 100 may perform view synthesis of shifting an object 10R in the selected synthesis target image to have a disparity corresponding to the second baseline b₂ in the relation with an object 10L in the reference image. The synthesized image i_{synthesized} obtained through the view synthesis may include an object 10R' shifted to the left in the view synthesis process and an artifact 10a due to the shifted object 10R'. The object 10R' of the synthesized image i_{synthesized} may be shifted in the left direction so as to have a depth value corresponding to the second baseline b₂ by disparity formed in the relation with the object 10L of the reference image i_{ref} that is the original image, and then, may be synthesized. In the view synthesis process, the artifact 10a may occur by arbitrarily synthesizing a region in which image information does not exist due to the shift of the object 10R.

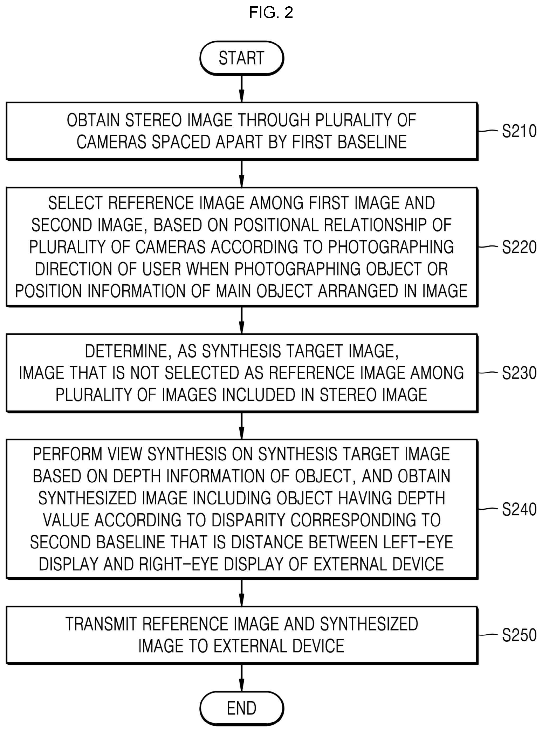

FIG. 2 is a flowchart illustrating a method, performed by the electronic device 100, of performing view synthesis on a stereo image, according to an embodiment of the present disclosure.

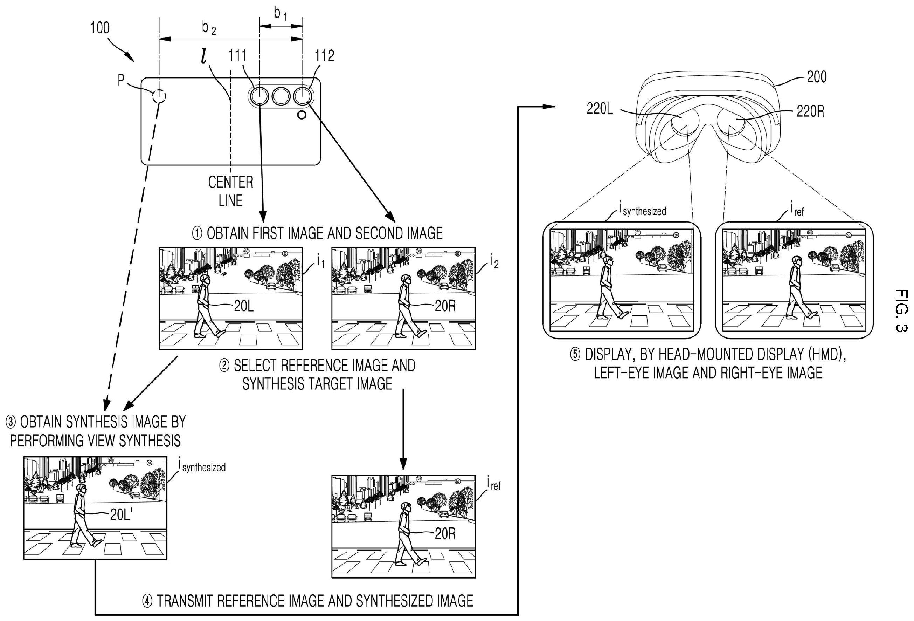

FIG. 3 is a diagram illustrating an operation in which the electronic device 100 performs view synthesis on a stereo image, according to an embodiment of the present disclosure.

Hereinafter, functions and/or operations of the electronic device 100 according to an embodiment of the present disclosure will be described in detail with reference to FIGS. 2 and 3 together.

Referring to FIG. 2, in operation S210, the electronic device 100 obtains a stereo image through a plurality of cameras spaced apart by a first baseline.

Referring to the embodiment shown in FIG. 3 together, the electronic device 100 may include the plurality of cameras 111 and 112, and may obtain a stereo image including a first image i₁ and a second image i₂ by using the plurality of cameras 111 and 112. The number and arrangement of the plurality of cameras 111 and 112 are not limited to those of the embodiment shown in FIG. 3. In an embodiment of the present disclosure, the electronic device 100 may include a single camera or three or more multi-cameras, and the plurality of cameras 111 and 112 may be arranged in a different manner other than in a row.

In an embodiment of the present disclosure, the plurality of cameras 111 and 112 may be stereo cameras configured to capture a stereo image. The plurality of cameras 111 and 112 may be spaced apart from each other by a first baseline b₁ and arranged on the electronic device 100. The first baseline b₁ may be, for example, 1.5 cm, but is not limited thereto. Referring to operation ① of FIG. 3, the electronic device 100 may obtain the first image i₁ by photographing an object by using the first camera 111 and may obtain the second image i₂ by photographing the object by using the second camera 112. In the embodiment shown in FIG. 3, the first image i₁ may be a left image arranged on the left side and the second image i₂ may be a right image arranged on the right side according to the photographing direction determined according to the direction in which a user holds the electronic device 100 when photographing the object.

Referring back to FIG. 2, in operation S220, the electronic device 100 selects a reference image from the stereo image, based on a positional relationship between the plurality of cameras according to a user's photographing direction or position information of a main object in the image. In an embodiment of the present disclosure, the electronic device 100 may recognize a photographing direction according to a posture in which the electronic device 100 is held by a user when photographing, and may select a reference image among a first image and a second image based on the recognized photographing direction and position information in which the plurality of cameras are arranged on the electronic device 100.

In operation S230, the electronic device 100 determines, as a synthesis target image, an image that is not selected as the reference image among the plurality of images included in the stereo image.

Referring to the embodiment shown in FIG. 3 together, the electronic device 100 may include a gravity sensor configured to obtain a measurement value regarding a gravity direction, and may recognize, by using the gravity sensor, a photographing direction regarding whether the electronic device 100 is held in a vertical direction or a horizontal direction by a user when photographing. In a case of photographing while being held in the horizontal direction, the electronic device 100 may recognize a photographing direction regarding whether photographing is performed in a direction in which the plurality of cameras 111 and 112 lean to the left or whether photographing is performed in a direction in which the plurality of cameras 111 and 112 lean to the right, based on a value measured by the gravity sensor. The electronic device 100 may select a reference image, which is an original image serving as a reference for view synthesis, among the first image i₁ and the second image i₂ obtained by the plurality of cameras 111 and 112, based on the recognized photographing direction and arrangement information regarding in which direction the plurality of cameras 111 and 112 are arranged on the electronic device 100.

In an embodiment of the present disclosure, the electronic device 100 may identify, based on the positional relationship of the plurality of cameras 111 and 112, a camera farthest from the center line l of the electronic device 100 among the plurality of cameras 111 and 112, and may select, as a reference image i_{ref}, an image captured by the identified camera among the first image i₁ and the second image i₂. Referring to operation ② of FIG. 3, the electronic device 100 may recognize a photographing direction by the user, based on the measurement value obtained by the gravity sensor, and may recognize that the plurality of cameras 111 and 112 are arranged to the right of the center line l of the electronic device 100, based on the recognized photographing direction and position information in which the plurality of cameras 111 and 112 are arranged. In this case, the electronic device 100 may identify the second camera 112 arranged farthest from the center line l among the plurality of cameras 111 and 112, and may select, as the reference image i_{ref}, the second image i₂ captured by the identified second camera 112. The electronic device 100 may identify, as a source camera, the first camera 111 arranged adjacent to the center line l among the plurality of cameras 111 and 112, and may determine, as a synthesis target image, the first image i₁ captured by the first camera 111 identified as the source camera.

In a case opposite to the embodiment shown in FIG. 3, that is, when the plurality of cameras 111 and 112 are arranged to the left of the center line l according to the photographing direction by the user, the electronic device 100 may identify the first camera 111 arranged to be farthest away from the center line l among the plurality of cameras 111 and 112, and may select, as the reference image i_{ref}, the first image i₁ captured by the first camera 111. The electronic device 100 may determine, as the synthesis target image, the second image i₂ that is the remaining image not selected as the reference image i_{ref} among the first image i₁ and the second image i₂.

In an embodiment of the present disclosure, the electronic device 100 may recognize a main object from the first image i₁ and the second image i₂, and may determine the reference image i_{ref} and a synthesis target image, based on position information of the main object in the image. Referring to operation ② of FIG. 3, the electronic device 100 may recognize at least one object from at least one of the first image i₁ and the second image i₂ by performing image segmentation, and may determine the main objects 20L and 20R, based on at least one of a position, a direction, a size, a depth, and a movement of the recognized at least one object. The electronic device 100 may determine the reference image i_{ref} and the synthesis target image, based on position information about where the main objects 20L and 20R are positioned in the first image i₁ and the second image i₂. For example, when the main objects 20L and 20R are positioned to be biased to the left in the image, the electronic device 100 may select the first image i₁ that is the left image as the synthesis target image. In the embodiment shown in FIG. 3, as the main objects 20L and 20R are positioned to be biased to the left in both the first image i₁ and the second image i₂, the electronic device 100 may select the first image i₁ that is the left image, as the synthesis target image on which the view synthesis is to be performed.

In an opposite example, when the main objects 20L and 20R are positioned to be biased to the right in the image, the electronic device 100 may select the second image i₂ that is a right image as the synthesis target image.

Referring back to FIG. 2, in operation S240, the electronic device 100 may perform view synthesis on the synthesis target image, based on depth information of an object, and may obtain a synthesized image including an object having a depth value according to a disparity corresponding to a second baseline that is a distance between displays of an external device. In the present disclosure, "view synthesis" refers to image processing in which a depth value of an object is changed and synthesized to have the same depth value as when the object is photographed at a desired camera position, by using an image and depth information of the object. In an embodiment of the present disclosure, view synthesis may refer to stereo view synthesis in which a depth value of an object in an image is changed by adjusting a disparity between matched pixels of each of a plurality of images constituting a stereo image, and the object of which the depth value is changed is synthesized with a background.

The electronic device 100 may obtain depth information of an object through stereo imaging using a left image and a right image, and may perform view synthesis by using the obtained depth information. In an embodiment of the present disclosure, the electronic device 100 may extract a feature point from the left image and the right image, may match the feature point extracted from each of the left image and the right image, may calculate disparity according to a distance between pixels constituting the matched feature point, and may obtain a depth value of the object by using the calculated disparity. However, the present disclosure is not limited thereto, and the electronic device 100 may include a depth sensor such as a time-of-flight (ToF) sensor or a Light wave Detection and Ranging (LiDAR) which is configured to measure a depth value, and may obtain depth information of an object by using the depth sensor.

Referring to operation ③ of FIG. 3 together, the electronic device 100 may perform view synthesis such that the first image i₁ selected as a synthesis target image has a depth value due to disparity as if it was captured at the virtual camera position P spaced apart from the second camera 112 by the second baseline b₂. The second baseline b₂ is an average value of distances between the left eye and the right eye of the user, and may be, for example, 6.5 cm. In an embodiment of the present disclosure, the electronic device 100 may perform view synthesis of shifting the object 20L of the synthesis target image in the right direction and synthesizing the shifted object 20L' with the background such that the object 20L of the first image i₁ selected as the synthesis target image and the object 20R in the reference image i_{ref} have a depth value according to a disparity corresponding to the second baseline b₂.

Unlike the embodiment shown in FIG. 3, when the second image i₂ is determined as the synthesis target image, the electronic device 100 may perform view synthesis of shifting the object 20R of the synthesis target image in the left direction and synthesizing the shifted object with the background such that the object 20R of the second image i₂ and the object 20L of the reference image (in this case, the "first image i₁") have a depth value according to the disparity corresponding to the second baseline b₂.

Referring back to FIG. 2, in operation S250, the electronic device 100 transmits the reference image and the synthesized image to the external device. Referring to operation ④ of FIG. 3 together, the first image i₁ of the stereo image including the first image i₁ and the second image i₂ is determined as the synthesis target image and becomes the synthesis image i_{synthesized} through view synthesis, and the second image i₂ is the reference image i_{ref} that is the original image not synthesized. The electronic device 100 may transmit the reference image i_{ref} and the synthesized image i_{synthesized} to the external device 200. The external device 200 may include an AR device or a VR device. The external device 200 may be implemented as, for example, a HMD device.

Referring to operation ⑤ of FIG. 3, the external device 200 may be implemented as a HMD device, and the HMD device may display a reference image i_{ref} and a synthesized image i_{synthesized} received from the electronic device 100. In an embodiment of the present disclosure, the HMD device may include the left-eye display 220L and the right-eye display 220R, may display the reference image i_{ref} through the left-eye display 220L and may display the synthesized image i_{synthesized} through the right-eye display 220R. However, the present disclosure is not limited to that shown in FIG. 3. In an embodiment of the present disclosure, when the first image i₁ that is a left image is selected as the reference image i_{ref}, and the second image i₂ that is a right image is determined as the synthesis target image, and the second image i₂ becomes the synthesized image i_{synthesized} through view synthesis, the reference image i_{ref} may be displayed through the left-eye display 220L of the HMD device, and the synthesized image i_{synthesized} may be displayed through the right-eye display 220R.

A user may capture an image or a video by using the electronic device 100 such as a smart phone, and may view image content by displaying the captured image or video through an external device such as the HMD device. As the first baseline b₁ that is the distance between the cameras of the electronic device 100 is less than the second baseline b₂ that is the distance between the binocular displays 220L and 220R of the external device, for example, the HMD device, the user is not able to feel the sense of depth of a real-world object from the image content when viewing the image content through the external device. When viewing the image content through the external device such as the HMD device, in order for the user to feel the sense of depth similar to the depth of the real-world object, it is necessary to perform stereo view synthesis in which the first baseline b₁ between the cameras is changed according to the second baseline b₂ that is a distance between the left eye and the right eye. Referring to FIG. 1, when stereo view synthesis is performed, a difference in depth values may occur due to a change in a baseline, and distortion such as the artifact 10a (see FIG. 1) may occur in an image due to the difference in depth values. When the image is distorted by the artifact 10a due to the view synthesis, a quality of the image may deteriorate, and user's satisfaction of viewing the image content through the HMD device 200 (see FIG. 1) may decrease.

The present disclosure provides the electronic device 100 and an operating method thereof for synthesizing a stereo image such that there is no deterioration in image quality while providing the sense of depth equal or similar to the depth of a real-world object by minimizing the occurrence of artifacts when performing view synthesis in which the first baseline b₁ that is a distance between the plurality of cameras 111 and 112 is changed to the second baseline b₂ corresponding to a distance (e.g., 6.5 cm) between a left eye and a right eye of a user.

The electronic device 100 according to the embodiment shown in FIGS. 2 and 3 may select the reference image and the synthesis target image from the stereo image including the first image i₁ and the second image i₂, based on a positional relationship of the plurality of cameras 111 and 112 according to a photographing direction of a user when photographing the object or position information of a main object arranged in the image, may obtain the synthesized image by performing view synthesis on the synthesis target image so as to allow the object selected based on the depth information of the object and included in the synthesis target image to have a depth value according to a disparity corresponding to the second baseline b₂, and may transmit the reference image and the synthesized image to an external device (e.g., the HMD device 200), such that, when the reference image and the synthesized image are displayed through the left-eye display 220L and the right-eye display 220R of the HMD device 200 spaced apart by a distance between the left eye and the right eye, the user may feel the same sense of depth as that of the real-world object. In addition, the electronic device 100 according to an embodiment of the present disclosure may provide a technical effect of minimizing the occurrence of artifacts due to view synthesis by selecting a synthesis target image and synthesizing the selected synthesis target image, and improving the quality of an image.

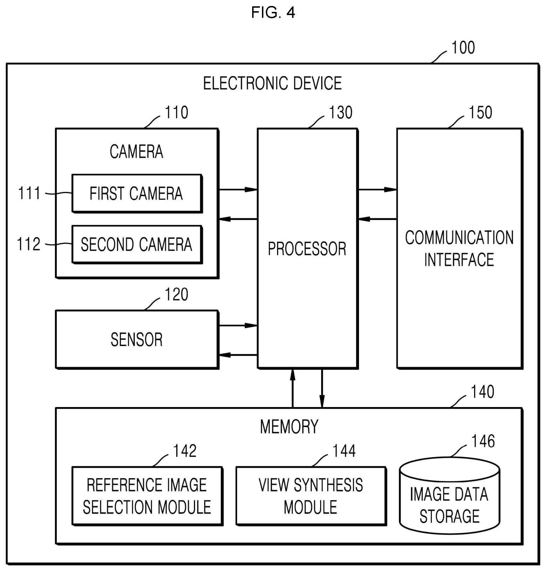

FIG. 4 is a block diagram illustrating components of the electronic device 100 according to an embodiment of the present disclosure.

The electronic device 100 may be implemented as a mobile device such as a smart phone including a camera 110, a tablet PC, a laptop computer, a digital camera, an electronic book terminal, a digital broadcasting terminal, a personal digital assistant (PDA), a portable multimedia player (PMP), a navigation system, or an MP3 player.

Referring to FIG. 4, the electronic device 100 may include the camera 110, a sensor 120, a processor 130, memory 140, and a communication interface 150. The camera 110, the sensor 120, the processor 130, the memory 140, and the communication interface 150 may be electrically and/or physically connected to each other. FIG. 4 illustrates only essential components for describing functions and/or operations of the electronic device 100, and the components included in the electronic device 100 are not limited to those shown in FIG. 4. In an embodiment of the present disclosure, the electronic device 100 may further include a battery that supplies driving power to the camera 110, the sensor 120, the processor 130, and the communication interface 150. In an embodiment of the present disclosure, the electronic device 100 may further include a display unit that displays an image or video obtained through the camera 110.

The camera 110 is configured to obtain an image by photographing an object. The camera 110 may include a lens module, an image sensor, and an image processing module. The camera 110 may obtain a still image or a video of an object by the image sensor (e.g., complementary metal-oxide-semiconductor (CMOS) or charge-coupled device (CCD)). The video may include a plurality of image frames continuously obtained by photographing the object through the camera 110. The image processing module may store a still image composed of a single image frame obtained through the image sensor or video data composed of a plurality of image frames in an image data storage 146 in the memory 140.

In an embodiment of the present disclosure, the camera 110 may be implemented as a small form factor to be mounted on a mobile device, and may be implemented as a lightweight RGB camera that consumes low power.

The camera 110 may include two or more cameras. The camera 110 may be implemented as a plurality of stereo cameras. In the embodiment shown in FIG. 4, the camera 110 may include the first camera 111 and the second camera 112. However, the present disclosure is not limited thereto, and in an embodiment of the present disclosure, the electronic device 100 may include three or more cameras. The first camera 111 and the second camera 112 may be spaced apart from each other by a first baseline.

The electronic device 100 may obtain a first image by photographing an object by using the first camera 111, and may obtain a second image by photographing the object by using the second camera 112. The first image and the second image may correspond to a stereo image.

The sensor 120 is configured to obtain a measurement value by sensing a movement, rotation, or speed change in the electronic device 100. In an embodiment of the present disclosure, the sensor 120 may include a gravity sensor.

The gravity sensor is a sensor configured to detect the gravity of Earth and obtain a measurement value regarding in which direction and how much the gravity acts. In an embodiment of the present disclosure, the gravity sensor may obtain a measurement value regarding the direction of gravity and may provide the measurement value to the processor 130. The processor 130 may determine, based on the measurement value obtained from the gravity sensor, whether the electronic device 100 is placed in a horizontal direction or a vertical direction. When the electronic device 100 is placed in a horizontal direction, the processor 130 may determine, based on the measurement value obtained from the gravity sensor, whether the electronic device 100 is placed in a left direction or a right direction.

In an embodiment of the present disclosure, the sensor 120 may further include an inertial measurement unit (IMU) sensor or a position sensor.

The IMU sensor is a sensor configured to measure a movement speed, a direction, an angle, and gravity acceleration of the electronic device 100 through a combination of an accelerometer, a gyroscope, and a magnetometer. The processor 130 may obtain 6 degree of freedom (DoF) measurement values including three-dimensional (3D) position coordinate values (x-axis, y-axis, and z-axis coordinate values) and 3D angular velocity values (roll, yaw, and pitch) of the electronic device 100 by using the IMU sensor.

The position sensor is a sensor configured to obtain position information of the electronic device 100, and may be implemented as, for example, a global positioning system (GPS) sensor.

In an embodiment of the present disclosure, the sensor 120 may include a depth sensor. The "depth sensor" is a sensor configured to obtain depth information by measuring depth values of objects, and may be implemented as, for example, a time-of-flight (ToF) sensor or a light wave detection and ranging (LiDAR). However, the depth sensor is not limited to the above-described examples. The processor 130 may obtain a depth map image by measuring a depth value of an object through the depth sensor.

The processor 130 may execute one or more instructions of a program stored in the memory 140. The processor 130 may be configured as a hardware component that performs arithmetic, logic, and input/output operations and image processing. In FIG. 4, the processor 130 is illustrated as one element, but is not limited thereto. In an embodiment of the present disclosure, the processor 130 may include one or more elements.

The processor 130 may include various types of processing circuitry and/or a plurality of processors. For example, the term "processor" used in the present disclosure including the claims may include various types of processing circuitry including at least one processor. The at least one processor and the one or more processors may be configured to individually and/or collectively in a distributed manner perform various functions described herein. As used herein, the "processor", the "at least one processor", and the "one or more processors" may be configured to perform various functions. However, the recited terms cover a situation in which one processor performs a part of functions and other processor(s) performs the other part of the functions, and a situation in which one processor may perform all functions. In addition, the at least one processor may include a combination of processors configured to perform a variety of the disclosed functions in a distributed manner. The at least one processor may execute program instructions to achieve or perform various functions.

The one or more processors included in the processor 130 may be circuitry such as a SoC, an IC, or the like. The processor 130 may be implemented as, for example, a general-purpose processor such as a central processing unit (CPU), an application processor (AP), a digital signal processor (DSP), etc., a graphic-dedicated processor such as a graphic processing unit (GPU), a vision processing unit (VPU), etc., or an artificial intelligence-dedicated processor such as a neural processing unit (NPU). The processor 130 may control input data to be processed according to a predefined operation rule or an artificial intelligence model. Alternatively, when the processor 130 is an artificial intelligence dedicated processor, the artificial intelligence dedicated processor may be designed with a hardware structure specialized for processing a specific artificial intelligence model.

The memory 140 may be configured as at least one type of storage medium among, for example, a flash memory type, a hard disk type, a multimedia card micro type, a card type memory (e.g., SD or XD memory, etc.), a random access memory (RAM), a static random access memory (SRAM), a Read-Only Memory (ROM), an electrically erasable programmable read-only memory (EEPROM), a programmable read-only memory (PROM), and an optical disk.

The memory 140 may store instructions related to functions and/or operations of the electronic device 100 selecting a reference image from a stereo image, determining a synthesis target image, and performing view synthesis on the synthesis target image. In an embodiment of the present disclosure, the memory 140 may store at least one of instructions, an algorithm, a data structure, a program code, and an application program which may be read by the processor 130. The instructions, the algorithm, the data structure, and the program code stored in the memory 140 may be implemented with any programming or scripting language such as C, C++, Java, assembler, or the like.

The memory 140 may store instructions, algorithms, data structures, or program codes related to a reference image selection module 142 and a view synthesis module 144. The "module" included in the memory 140 indicates a unit for processing a function or an operation performed by the processor 130, and may be implemented as software such as instructions, algorithms, data structures, or program code. In an embodiment of the present disclosure, the memory 140 may include the image data storage 146.

The processor 130 may be implemented by executing the instructions or the program code stored in the memory 140. Hereinafter, functions and/or operations that the processor 130 performs by executing the instructions or the program code of each of the plurality of modules stored in the memory 140 will be described in detail.

The reference image selection module 142 includes instructions or program code for executing a function and/or an operation of selecting a reference image for view synthesis among a plurality of images constituting a stereo image. In the embodiment of the present disclosure, the reference image selection module 142 may select the reference image from the stereo image, based on positional relationship information of the plurality of cameras according to a photographing direction of a user or position information of a main object in an image. The processor 130 may select the reference image from the stereo image captured by the plurality of cameras 111 and 112 by executing the instructions or the program code of the reference image selection module 142. However, the present disclosure is not limited thereto, and the processor 130 may select a reference image from a stereo image obtained in advance and stored in the image data storage 146.

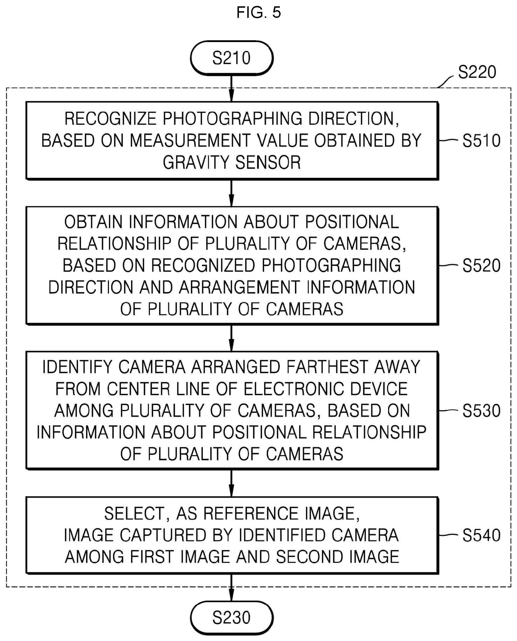

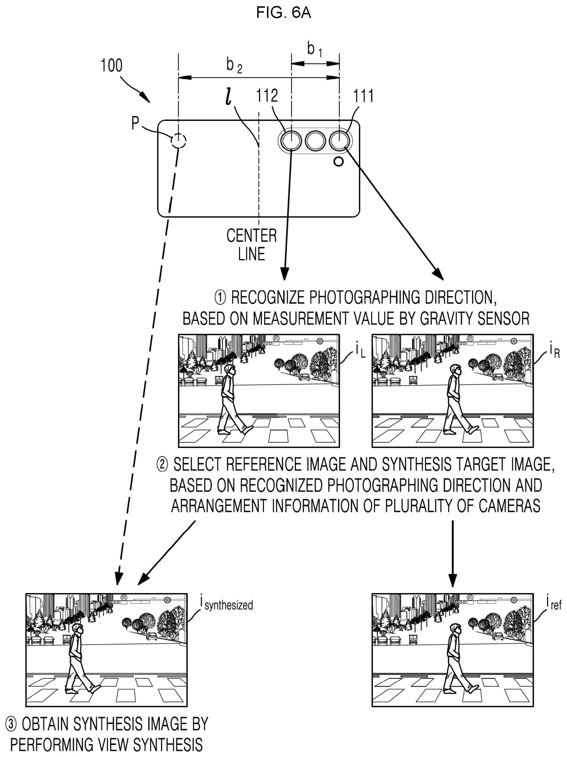

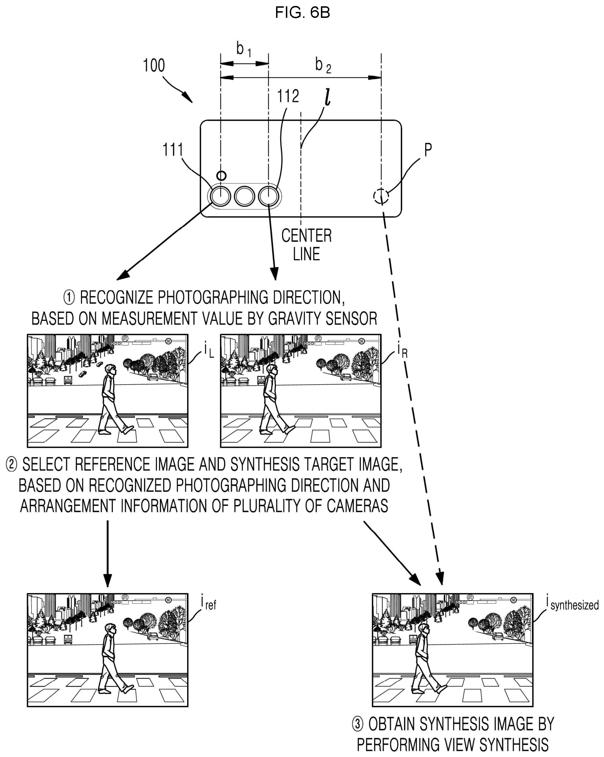

The processor 130 may recognize the photographing direction regarding whether the electronic device 100 is held in a vertical direction or a horizontal direction by the user when capturing the image, based on a measurement value regarding the gravity direction obtained from the gravity sensor. In a case of photographing while being held in the horizontal direction, the processor 130 may recognize a photographing direction regarding whether photographing is performed in a direction in which the plurality of cameras 111 and 112 lean to the left or whether photographing is performed in a direction in which the plurality of cameras 111 and 112 lean to the right, based on a value measured by the gravity sensor. The processor 130 may select the reference image that is an original image for a reference for view synthesis, among the first image and the second image obtained by the plurality of cameras 111 and 112, based on the recognized photographing direction and arrangement information regarding in which direction the plurality of cameras 111 and 112 are arranged on the electronic device 100. The processor 130 may determine, as the synthesis target image, the remaining image that is not selected as the reference image among the first image and the second image. A particular embodiment in which the processor 130 recognizes the photographing direction, based on the measurement value obtained by the gravity sensor, selects the reference image from the stereo image based on the photographing direction and the positional relationship of the plurality of cameras 111 and 112 according to the arrangement relation of the plurality of cameras 111 and 112, and determines the synthesis target image will be described in detail with reference to FIGS. 5, 6A, and 6B.

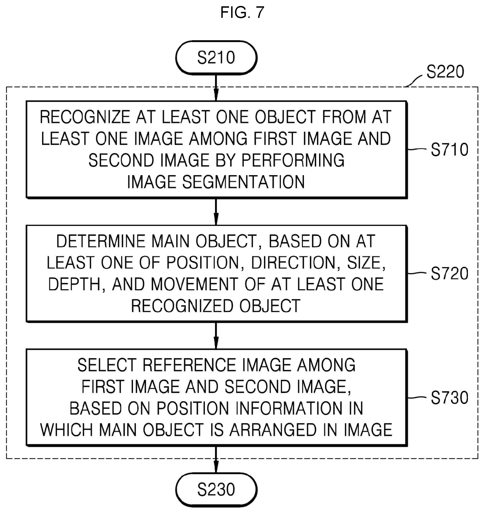

The processor 130 may recognize a main object from at least one image of the stereo image, and may select the reference image, based on position information of the main object in the image. In an embodiment of the present disclosure, the processor 130 may recognize at least one object from at least one image among the first image and the second image included in the stereo image by performing image segmentation, and may determine the main object, based on at least one of a position, a direction, a size, a depth, and a movement of the recognized at least one object. The processor 130 may determine the reference image and the synthesis target image, based on position information about where the main object is located in the first image and the second image. In an embodiment of the present disclosure, when the main object is positioned to be biased in the first direction with respect to the center of the image, the processor 130 may select, as the reference image, an image in which the main object is arranged closest to the center of the image among the first image and the second image, and may determine, as the synthesis target image, the remaining image that is not selected as the reference image among the first image and the second image. For example, when the main object is positioned to be biased to the left in the image, the processor 130 may select, as the reference image, an image in which the main object is arranged closest to the center of the image among the first image and the second image, and may determine, as the synthesis target image, the first image that is the left image. In the opposite example, when the main object is positioned to be biased to the right in the image, the processor 130 may determine the second image that is the right image as the synthesis target image. A particular embodiment in which the processor 130 recognizes a main object in an image and determines a reference image and a synthesis target image based on position information of the main object will be described in detail with reference to FIGS. 7, 8, 9A, and 9B.

The view synthesis module 144 is configured with instructions or program code for executing a function and/or an operation of obtaining a synthesized image by performing view synthesis on a synthesis target image, based on depth information of an object. In the present disclosure, "view synthesis" refers to image processing in which a depth value of an object is changed and synthesized to have the same depth value as when the object is photographed at a desired camera position, by using an image (e.g., an RGB image) and depth information (e.g., a depth map image) of the object. In an embodiment of the present disclosure, view synthesis may refer to stereo view synthesis in which a depth value of an object in an image is changed by adjusting a disparity between matched pixels of each of a plurality of images constituting a stereo image, and the object of which the depth value is changed is synthesized with a background. The processor 130 may perform view synthesis on a synthesis target image and obtain a synthesized image by executing the instructions or the program code of the view synthesis module 144.

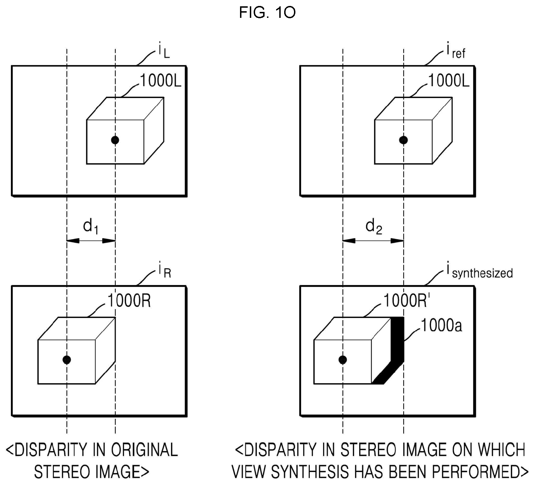

The first camera 111 and the second camera 112 may be spaced apart from each other by a first baseline, and thus, a stereo image obtained through the first camera 111 and the second camera 112 may have a disparity corresponding to the first baseline. The processor 130 may perform view synthesis on the synthesis target image, based on the depth information of the object, and thus, may obtain a synthesized image including an object having a depth value due to a disparity corresponding to the second baseline that is the distance between the displays of the external device. The "second baseline" is an average value of distances between the left eye and the right eye of the user, and may be, for example, 6.5 cm. In an embodiment of the present disclosure, the processor 130 may perform the view synthesis in which an object included in the synthesis target image is shifted to allow the object included in the first image selected as the synthesis target image and an object included in the reference image to have depth values according to the disparity corresponding to the second baseline, and the shifted object is synthesized with the background. A disparity that is changed when an object is shifted due to view synthesis will be described in detail with reference to FIG. 10.

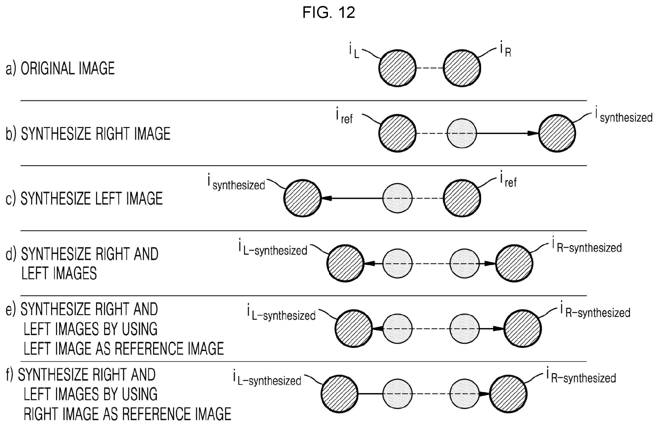

During the view synthesis, the reference image may be maintained as the original image without being synthesized. However, in an embodiment of the present disclosure, the processor 130 may perform view synthesis on the reference image as well as the synthesis target image. In this case, the processor 130 may obtain the second synthesized image by performing view synthesis in which an object is shifted in the first direction so as to allow the object included in the synthesis target image to have a depth value according to the disparity corresponding to the second baseline, and an object included in the reference image is shifted in the second direction opposite to the first direction. Various view synthesis methods according to whether to synthesize a reference image will be described in detail with reference to FIG. 12.

The image data storage 146 is a storage device in the memory 140 which stores a stereo image captured and obtained by the plurality of cameras 111 and 112 or a stereo image obtained in advance through a network such as a website. The image data storage 146 may be configured as non-volatile memory. The non-volatile memory refers to a storage medium that may store and maintain information even when power is not supplied, and may use the stored information again when power is supplied. The non-volatile memory may include, for example, at least one of a flash memory, a hard disk, a solid state drive (SSD), a multimedia card micro type memory, a card type memory (e.g., SD or XD memory), a read-only memory (ROM), a magnetic memory, a magnetic disk, and an optical disk.

While the image data storage 146 is illustrated as a component included in the memory 140 in FIG. 4, the present disclosure is not limited thereto as shown in the drawings. In an embodiment of the present disclosure, the image data storage 146 may be configured as a database in the electronic device 100, which is a separate component from the memory 140.

However, the present disclosure is not limited thereto, and in an embodiment of the present disclosure, the image data storage 146 may be implemented as a web storage or a cloud server that is accessible through a network and performs a storage function. In this case, the electronic device 100 may communicatively connect to the web storage or the cloud server through the communication interface 150, and may perform data transmission and reception. The processor 130 may receive the stereo images from the web storage or the cloud server.

The processor 130 may transmit the reference image and the synthesized image to an external device by controlling the communication interface 150. The communication interface 150 is a hardware device configured to perform data communication with an external device and/or a server. The communication interface 150 may be configured as a device that performs data communication with an external device or a server by using at least one of data communication methods including, for example, wireless LAN, Wi-Fi, Wi-Fi Direct, Bluetooth, Bluetooth low energy (BLE), infrared Data Association (IrDA), near field communication (NFC), wireless broadband internet (WiBro), world interoperability for microwave access (WiMAX), shared wireless access protocol (SWAP), wireless gigabit Alliance (WiGig), and radio frequency (RF) communication. The external device is a device connected to the electronic device 100 through a communication network, and may be, for example, a HMD device.

In an embodiment of the present disclosure, the communication interface 150 may be connected to the HMD device 200 (see FIG. 3) by the control of the processor 130, and may transmit and receive data. The communication interface 150 may be paired with the HMD device 200 through a short-range wireless communication network, for example, Bluetooth, BLE, or WiFi Direct, and may transmit the reference image and the synthesized image to the HMD device 200. The HMD device 200 may display the reference image and the synthesized image through the left-eye display 220L (see FIG. 3) and the right-eye display 220R (see FIG. 3).

FIG. 5 is a flowchart illustrating a method, performed by the electronic device 100, of selecting a reference image from a stereo image based on a photographing direction and arrangement information of a plurality of cameras, according to an embodiment of the present disclosure.

Operations S510 to S540 shown in FIG. 5 are detailed operations of operation S220 of FIG. 2. Operation S510 shown in FIG. 5 may be performed after operation S210 of FIG. 2 is performed. After operation S540 shown in FIG. 5 is performed, operation S230 of FIG. 2 may be performed.

FIG. 6A is a diagram illustrating an embodiment in which the electronic device 100 of the present disclosure selects the right image i_{R} from a stereo image as a reference image i_{ref}, based on a photographing direction and arrangement information of the plurality of cameras 111 and 112, determines the left image i_{L} as a synthesis target image, and performs view synthesis on the synthesis target image.

Hereinafter, the function and/or operation of the electronic device 100 will be described in detail with reference to FIGS. 5 and 6A together.

In operation S510 of FIG. 5, the electronic device 100 recognizes a photographing direction based on a measurement value obtained by a gravity sensor. In an embodiment of the present disclosure, the electronic device 100 may include the gravity sensor configured to obtain a measurement value of the direction of gravity. The electronic device 100 may recognize a photographing direction regarding whether the electronic device 100 is held in a vertical direction or a horizontal direction by the user when photographing using the gravity sensor. Referring to operation ① of FIG. 6A together, when the electronic device 100 is held and rotated by 90° in the left direction by the user and performs photographing, the processor 130 (see FIG. 4) of the electronic device 100 may recognize the photographing direction based on the measurement value by the gravity sensor, and may identify that the plurality of cameras 111 and 112 lean to the right from the viewpoint of an object to be photographed.

Referring to operation S520 of FIG. 5, the electronic device 100 obtains information about a positional relationship between the plurality of cameras based on the recognized photographing directions and the arrangement information of the plurality of cameras. The arrangement information of the plurality of cameras regarding in which direction and in which position the first camera 111 and the second camera 112 are arranged on the electronic device 100 may be stored in advance. The processor 130 may obtain information about the positional relationship of the plurality of cameras 111 and 112, based on the recognized photographing direction and the arrangement information of the plurality of cameras 111 and 112. Referring to the embodiment shown in FIG. 6A together, among the plurality of cameras 111 and 112, the first camera 111 may be arranged at an upper end of the electronic device 100 and the second camera 112 may be arranged at a lower end than the first camera 111. Based on the recognized photographing direction and the arrangement information of the plurality of cameras 111 and 112, the processor 130 may obtain position information indicating that the plurality of cameras 111 and 112 lean in the right direction in the photographing direction in which the electronic device 100 is rotated by 90° in the left direction, and the first camera 111 is located in a relatively more right direction than the second camera 112.

Referring to operation S530 of FIG. 5, the electronic device 100 identifies a camera arranged farthest from the center line of the electronic device 100 among the plurality of cameras, based on the information about the positional relationship between the plurality of cameras. Referring to the embodiment shown in FIG. 6A together, among the plurality of cameras 111 and 112, the first camera 111 is the camera which is arranged farthest to the right based on the virtual center line l. In this case, the processor 130 may identify, based on the information about the positional relationship of the plurality of cameras 111 and 112, the first camera 111 arranged to be most spaced apart from the center line l among the plurality of cameras 111 and 112.

Referring to operation S540 of FIG. 5, the electronic device 100 selects, as a reference image, an image captured by the identified camera among the left image and the right image. Referring to operation ② of FIG. 6A together, the electronic device 100 may obtain a right image i_{R} by photographing an object by using the first camera 111 in a photographing direction rotated to the left by 90°, and may obtain a left image i_{L} by photographing the object by using the second camera 112. The processor 130 of the electronic device 100 may select, as the reference image i_{ref} of the view synthesis, the right image i_{R} captured by the first camera 111 identified as the camera farthest from the center line l among the left image i_{L} and the right image i_{R}. In an embodiment of the present disclosure, the processor 130 may identify the second camera 112 arranged adjacent to the center line l as a source camera, and may determine, as a synthesis target image, the left image i_{L} captured by the second camera 112 identified as the source camera.

Referring to operation ③ of FIG. 6A, the processor 130 of the electronic device 100 may obtain a synthesized image i_{synthesized} by performing view synthesis on the synthesis target image. In an embodiment of the present disclosure, the processor 130 may perform view synthesis in which an object of the synthesis target image is shifted in a right direction so as to allow the object included in the reference image i_{ref} and the object included in the synthesized image i_{synthesized} to have a disparity corresponding to the second baseline that is a distance between the binocular displays of the external device (e.g., the HMD device).

FIG. 6B is a diagram illustrating an embodiment in which the electronic device 100 of the present disclosure selects a left image i_{L} from a stereo image as a reference image i_{ref} based on a photographing direction and arrangement information of the plurality of cameras 111 and 112, and determines a right image i_{R} as a synthesis target image.

FIG. 6B is the same as FIG. 6A, except that the photographing direction according to the holding posture of the electronic device 100 by the user is the opposite direction and the reference image i_{ref} and the synthesis target image are determined to be opposite according to the photographing direction, and thus, redundant descriptions are omitted here.

Referring to operation ① of FIG. 6B, when the electronic device 100 is held and rotated by 90° in the right direction by the user, the processor 130 (see FIG. 4) of the electronic device 100 may recognize the photographing direction based on the measurement value by the gravity sensor, and may identify that the plurality of cameras 111 and 112 lean to the left from the viewpoint of the object to be photographed.

The processor 130 may obtain information about the positional relationship of the plurality of cameras 111 and 112, based on the recognized photographing direction and the arrangement information of the plurality of cameras 111 and 112 on the electronic device 100. In the embodiment shown in FIG. 6B, based on the recognized photographing direction and the arrangement information of the plurality of cameras 111 and 112, the processor 130 may obtain position information indicating that the plurality of cameras 111 and 112 lean in the left direction in the photographing direction in which the electronic device 100 is rotated by 90° in the right direction, and the first camera 111 is located in a relatively more left direction than the second camera 112.

Referring to operation ② of FIG. 6B, the electronic device 100 may obtain the left image i_{L} by photographing the object by using the first camera 111, may obtain a right image i_{R} by photographing the object by using the second camera 112, and may select the reference image i_{ref} among the left image i_{L} and the right image i_{R}, based on information about the positional relationship of the plurality of cameras 111 and 112. In an embodiment of the present disclosure, the processor 130 may identify a camera arranged farthest away from the center line l of the electronic device 100, and may select, as the reference image i_{ref}, an image obtained by the identified camera among the left image i_{L} and the right image i_{R}. In the embodiment shown in FIG. 6B, the first camera 111 among the plurality of cameras 111 and 112 is the camera which is arranged farthest to the right, based on the virtual center line l. In this case, the processor 130 may identify, based on the information about the positional relationship of the plurality of cameras 111 and 112, the first camera 111 arranged farthest from the center line l among the plurality of cameras 111 and 112, and may select the left image i_{L} obtained by the first camera 111 as the reference image i_{ref}. In an embodiment of the present disclosure, the processor 130 may identify the second camera 112 arranged adjacent to the center line l as a source camera, and may determine, as a synthesis target image, the right image i_{R} captured by the second camera 112 identified as the source camera.

Referring to operation ③ of FIG. 6B, the processor 130 of the electronic device 100 may obtain a synthesized image i_{synthesized} by performing view synthesis on the synthesis target image. In an embodiment of the present disclosure, the processor 130 may perform view synthesis in which the object of the synthesis target image is shifted in a left direction so as to allow the object included in the reference image i_{ref} and the object included in the synthesized image i_{synthesized} to have a disparity corresponding to the second baseline that is the distance between the binocular displays of the external device (e.g., the HMD device).

The electronic device 100 according to the embodiment shown in FIGS. 5, 6A, and 6B may recognize, based on a measurement value obtained by using the gravity sensor, a photographing direction according to a holding posture of a user, may determine the reference image i_{ref} and the synthesis target image among the stereo images i_{L} and i_{R} based on the photographing direction and arrangement information of the plurality of cameras 111 and 112, and may obtain the synthesized image i_{synthesized} by performing view synthesis on the synthesis target image, thereby providing a technical effect of minimizing the occurrence of artifacts due to view synthesis and improving the quality of image. In addition, as the user (photographer) is highly likely to photograph an object while viewing a real scene in the central area of the electronic device 100, the electronic device 100 according to an embodiment of the present disclosure may match the intention of the user (photographer), and may give an effect as if the person viewing an image through the external device (e.g., the HMD device) views the object at the same position as the photographer, thereby improving the sense of immersion in viewing the image.

FIG. 7 is a flowchart illustrating a method, performed by the electronic device 100, of selecting a reference image based on position information of a main object in an image, according to an embodiment of the present disclosure.

Operations S710 to S730 shown in FIG. 7 are detailed operations of operation S220 of FIG. 2. Operation S710 shown in FIG. 7 may be performed after operation S210 of FIG. 2 is performed. After operation S730 shown in FIG. 7 is performed, operation S230 of FIG. 2 may be performed.

In operation S710, the electronic device 100 recognize at least one object from at least one image among a first image and a second image by performing image segmentation. In the present disclosure, "image segmentation" refers to an image processing technique of classifying a class or category of an object in an original image, distinguishing the object from other objects or background images in the image according to a result of the classification, and segmenting the object according to a distinguished outline. In an embodiment of the present disclosure, the processor 130 (see FIG. 4) of the electronic device 100 may segment at least one object from an image by using a deep neural network model trained to classify a plurality of objects into labels, classes, or categories. As the image segmentation is well known to one of ordinary skill in the art, detailed descriptions thereof are omitted here.

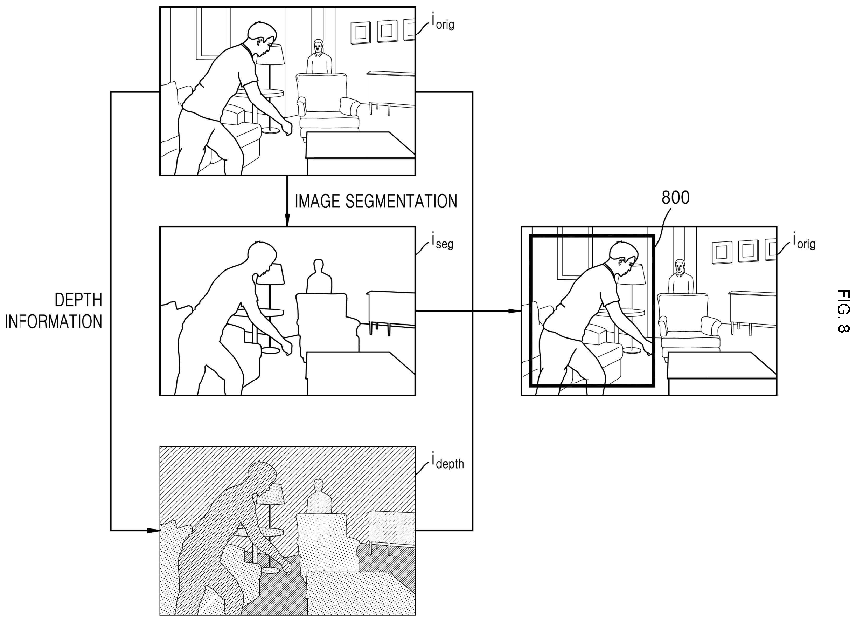

FIG. 8 is a diagram illustrating an operation in which the electronic device 100 recognizes a main object 800 from an image by using an original image i_{orig}, a segmentation image i_{seg}, and a depth map image i_{depth}, according to an embodiment of the present disclosure. Referring to operation S710 of FIG. 7 together with the embodiment shown in FIG. 8, the processor 130 of the electronic device 100 may obtain the segmentation image i_{seg} by performing image segmentation on the original image i_{orig} by using the deep neural network model. The segmentation image i_{seg} is distinguished from other objects or background images through the outline and includes a plurality of divided objects. The processor 130 may recognize the plurality of objects from the segmentation image i_{seg}.

Referring back to FIG. 7, in operation S720, the electronic device 100 determines a main object, based on at least one of a position, a direction, a size, a depth, and a movement of the at least one recognized object. In an embodiment of the present disclosure, the electronic device 100 may determine a dynamic object that is at the closest position to the camera, is in a specific direction (e.g., right, left, above, below, etc.), has a large size, or has the large motion among the recognized at least one object as a core object, that is, a main object.

In an embodiment of the present disclosure, the processor 130 of the electronic device 100 may recognize at least one object based on the segmentation image and the depth information of the object, and may determine the main object among the recognized at least one object. Referring to the embodiment shown in FIG. 8 together, the processor 130 may obtain a depth map image i_{depth} by obtaining depth information of an object. For example, the processor 130 may obtain the depth map image i_{depth} through a stereo imaging method of measuring a depth value of an object, based on a disparity between pixels included in each of stereo images obtained by using the plurality of cameras 111 and 112 (see FIG. 4). However, the present disclosure is not limited thereto, and the processor 130 may obtain a three-dimensional depth map image i_{depth} of objects included in the surrounding space by using a simultaneous localization and mapping (SLAM) technique. In addition, for example, the electronic device 100 may include the depth sensor including the ToF sensor or the LiDAR, and may obtain the depth map image i_{depth} by measuring depth values of objects in a surrounding space by using the depth sensor. The processor 130 may recognize the plurality of objects from the segmentation image i_{seg}, may obtain depth values of the plurality of objects from the depth map image i_{depth}, may calculate an average value of the obtained depth values, and thus, may determine, as the main object 800, an object having the smallest average value, that is, the smallest depth value, among the plurality of objects.

Referring back to FIG. 7, in operation S730, the electronic device 100 selects a reference image among the first image and the second image based on position information in which the main object is arranged in the image. In an embodiment of the present disclosure, when the main object is positioned to be biased in the first direction with respect to the center of the image, the electronic device 100 may select, as the reference image, an image in which the main object is arranged closest to the center of the image among the first image and the second image. That is, the electronic device 100 may determine, as a synthesis target image, an image in which the main object is most biased in the first direction among the first image and the second image. When the main object is positioned in a first direction, for example, to the right, the electronic device 100 may select, as the reference image, an image in which the main object is positioned in a relatively central area among the first image and the second image, and may determine, as the synthesis target image, an image in which the main object is positioned relatively to the right. In the opposite case, that is, when the main object is positioned to be biased to the left, the electronic device 100 may select, as the reference image, an image in which the main object is positioned in a relatively central area among the first image and the second image, and may determine, as the synthesis target image, an image in which the main object is positioned relatively to the left.

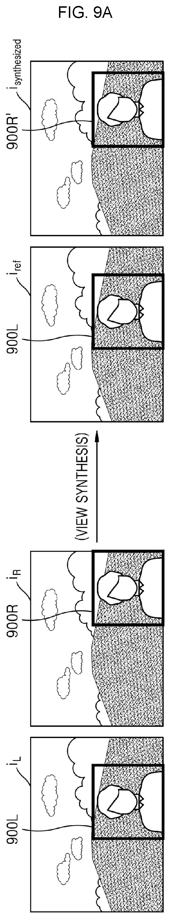

FIG. 9A is a diagram illustrating an embodiment in which the electronic device 100 of the present disclosure determines a synthesis target image based on position information of main objects 900L and 900R recognized in an image and performs view synthesis on the synthesis target image. Referring to operation S730 of FIG. 7 together with the embodiment shown in FIG. 9A, a left image i_{L} and a right image i_{R} may constitute a stereo image, and the main objects 900L and 900R may be recognized from the left image i_{L} and the right image i_{R}, respectively. The processor 130 (see FIG. 4) of the electronic device 100 may recognize the positions of the main objects 900L and 900R recognized from the stereo images i_{L} and i_{R}, and may identify that the main objects 900L and 900R are arranged on the right side with respect to the central area of the image. In this case, the processor 130 may identify the right image i_{R} that is an image in which the main objects 900L and 900R are positioned relatively more biased to the right among the left image i_{L} and the right image i_{R}, and may determine the identified right image i_{R} as a synthesis target image. The processor 130 may identify the left image i_{L} in which the main objects 900L and 900R are relatively more located in the central region of the image among the left image _{iL} and the right image i_{R}, and may determine the identified left image i_{L} as the reference image i_{ref}.

The processor 130 may obtain the synthesized image i_{ref} by shifting and synthesizing the object 900R in the synthesis target image in the left direction such that the object 900L included in the reference image i_{ref} and an object 900R' included in the synthesized image i_{synthesized} have a disparity corresponding to the second baseline that is the distance between the binocular displays of the external device (e.g., the HMD device).

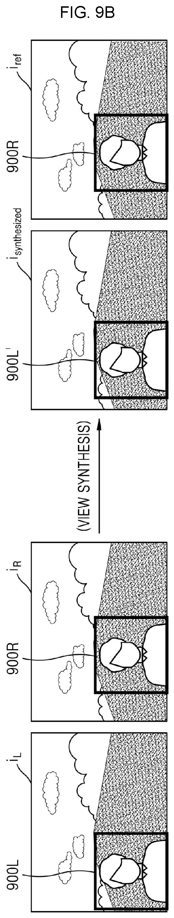

FIG. 9B is a diagram illustrating an embodiment in which the electronic device 100 of the present disclosure determines a synthesis target image based on position information of main objects 900L and 900R recognized in an image and performs view synthesis on the synthesis target image. Referring to operation S730 of FIG. 7 together with the embodiment shown in FIG. 9B, the left image i_{L} and the right image i_{R} may constitute a stereo image, and the main objects 900L and 900R may be recognized from the left image i_{L} and the right image i_{R}, respectively. The processor 130 (see FIG. 4) of the electronic device 100 may recognize the positions of the main objects 900L and 900R recognized from the stereo images i_{L} and i_{R}, and may identify that the main objects 900L and 900R are arranged on the left side with respect to the central area of the image. In this case, the processor 130 may identify the left image i_{L} that is an image in which the main objects 900L and 900R are positioned relatively more biased to the left among the left image i_{L} and the right image i_{R}, and may determine the identified left image i_{L} as the synthesis target image. The processor 130 may identify the right image i_{R} in which the main objects 900L and 900R are positioned relatively to the central region of the image among the left image i_{L} and the right image i_{R}, and may determine the identified right image i_{R} as the reference image i_{ref}.

The processor 130 may obtain the synthesized image i_{synthesized} by shifting and synthesizing the object 900L in the synthesis target image in a left direction such that the object 900R included in the reference image i_{ref} and an object 900L' included in the synthesized image i_{synthesized} have a disparity corresponding to the second baseline that is the distance between the binocular displays of the external device (e.g., the HMD device).

In general, when a main object (e.g., a person, an animal, etc.) in an image is viewed in a central region in the image, the convenience of viewing may be improved. The electronic device 100 according to the embodiment shown in FIGS. 7, 8, 9A, and 9B recognizes a main object from at least one image of stereo images, determines a reference image i_{ref} and a synthesis target image based on a position of the recognized main object, and performs view synthesis by shifting the main object in the determined synthesis target image to a central area of the image so as to obtain a synthesized image i_{synthesized}, thereby providing a technical effect of minimizing the occurrence of artifacts due to the view synthesis and improving user's viewing convenience.

FIG. 10 is a diagram illustrating a disparity d₁ in original stereo images i_{L} and i_{R} and a disparity d₂ in stereo images i_{ref} and i_{synthesized} after view synthesis is performed.

Referring to FIG. 10, objects 1000L and 1000R included in the original stereo images i_{L} and i_{R} may have the first disparity d₁. For example, a distance between pixels of the object 1000R in the right image i_{R} matched with a specific pixel of the object 1000L included in the left image i_{L} of the original stereo image may be spaced apart by the first disparity d₁. As a disparity in stereo images is inversely proportional to a depth value of an object, the object 1000L included in the left image i_{L} and the object 1000R included in the right image i_{R} may have a depth value corresponding to a reciprocal of the first disparity d₁.

The processor 130 (see FIG. 4) of the electronic device 100 may obtain a synthesized image i_{synthesized} by performing view synthesis on the synthesis target image so as to have a disparity corresponding to the baseline that is the distance between the binocular displays of the external device (e.g., the HMD device). As the baseline between the binocular displays of the external device is greater than the baseline between the plurality of cameras of the electronic device 100, the processor 130 may perform view synthesis to increase the disparity of an object having a small depth value, that is, an object positioned relatively close to the camera. Referring to the stereo images i_{ref} and i_{synthesized} on which the view synthesis is performed in FIG. 10, the processor 130 may not synthesize the object 1000L included in the reference image i_{ref}, but may obtain the synthesized image i_{synthesized} by performing the view synthesis to shift the object 1000R of the right image i_{R} determined as the synthesis target image in the left direction. As the object 1000R is shifted by the view synthesis, an object 1000R' included in the synthesized image i_{synthesized} may be spaced apart from the object 1000L included in the reference image i_{ref} by the second disparity d₂, and an artifact 1000a may occur. In particular, the distance between the pixels of the object 1000L included in the reference image i_{ref} matched with a specific pixel of the object 1000R' included in the synthesized image i_{synthesized} is the second disparity d₂ that may be greater than the first disparity d₁ before the view synthesis. As the disparity in the stereo image is inversely proportional to the depth value of the object, the depth value of the object may decrease as the disparity increases from the first disparity d₁ to the second disparity d₂ after the view synthesis. That is, as the object closer to the camera appears closer, the sense of depth and the user's sense of immersion may be further improved.

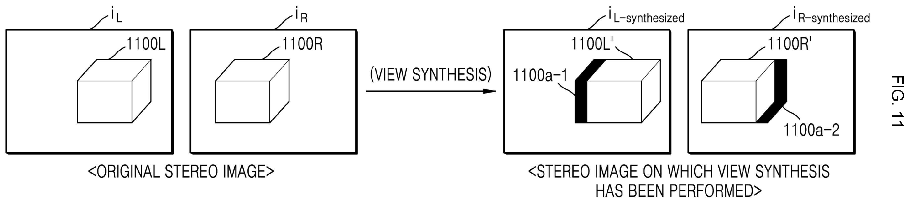

In the embodiment shown in FIG. 10, a method of obtaining a synthesized image i_{synthesized} by performing view synthesis only on a synthesized target image while not synthesizing a reference image i_{ref} but maintaining the reference image i_{ref} in an original image state is described. However, the present disclosure is not limited thereto, and the electronic device 100 according to an embodiment of the present disclosure may perform view synthesis on the reference image i_{ref} as well as the synthesis target image. A particular embodiment of performing view synthesis on both the reference image i_{ref} and the synthesis target image will be described in detail with reference to FIGS. 11 and 12.

FIG. 11 is a diagram illustrating stereo images i_{L-synthesized} and i_{R-synthesized} according to a result of performing, by the electronic device 100, view synthesis on the original stereo images i_{L} and i_{R}, according to an embodiment of the present disclosure.

Referring to FIG. 11, the original stereo image includes the left image i_{L} and the right image i_{R}, and the left image i_{L} and the right image i_{R} include an object 1100L and an object 1100R, respectively. In an embodiment of the present disclosure, the processor 130 (see FIG. 4) of the electronic device 100 may determine the left image i_{L} of the original stereo image as a reference image and the right image i_{R} as a synthesis target image. However, this is only for convenience of descriptions, and the present disclosure is not limited thereto. The processor 130 may determine the right image i_{R} as the reference image and the left image i_{L} as the synthesis target image.

The processor 130 may shift both the object 1100L included in the reference image and the object 1100R included in the synthesis target image such that the object 1100L included in the reference image and the object 1100R included in the synthesis target image have a disparity corresponding to a baseline that is a distance between the binocular displays of the external device (e.g., the HMD device). In an embodiment of the present disclosure, the processor 130 may obtain synthesized images i_{L-synthesized} and i_{R-synthesized} by performing view synthesis in which the object 1100L included in the reference image is shifted in a first direction (a right direction in the embodiment shown in FIG. 11) and the object 1100R included in the synthesis target image is shifted in a direction opposite to the first direction (a left direction in the embodiment shown in FIG. 11).

As the view synthesis is performed, an object 1100L' included in the left synthetic image i_{L-synthesized} is shifted by a first distance, compared to the object 1100L of the original image (the left image i_{L}), and an artifact 1100a-1 occurs due to the shift of the object 1100L'. An object 1100R' included in the right synthesized image i_{R-synthesized} is shifted by a second distance compared to the object 1100R of the original image (the right image i_{R}), and an artifact 1100a-2 occurs due to the shift of the object 1100R'. As in the embodiment shown in FIG. 11, when the left image i_{L} is selected as the reference image, the size of the first distance by which the object 1100L' included in the left synthesized image i_{L-synthesized} obtained through view synthesis for the reference image is shifted may be less than the size of the second distance by which the object 1100R' included in the right synthesized image i_{R-synthesized} is shifted. That is, when synthesizing the view with respect to the image selected as the reference image, the shift distance of the object may be less than the shift distance of the object due to the view synthesis with respect to the synthesis target image. In the opposite embodiment, that is, when the right image i_{R} is selected as the reference image and the left image i_{L} is determined as the synthesis target image, the size of the first distance by which the object 1100L' included in the left synthesized image i_{L-synthesized} is shifted may be greater than the size of the second distance by which the object 1100R' included in the right synthesized image i_{R-synthesized} is shifted.

FIG. 12 is a conceptual diagram illustrating an operation in which the electronic device 1000 performs view synthesis according to a synthesis target image, according to an embodiment of the present disclosure.

Referring to a of FIG. 12, the original stereo image may include a left image i_{L} and a right image i_{R}.

In the embodiment shown in b of FIG. 12, the electronic device 100 may select the left image i_{L} of the original stereo image as a reference image i_{ref}, may determine the right image i_{R} as a synthesis target image, and may obtain a synthesized image i_{synthesized} by performing view synthesis on the synthesis target image.

Referring to the embodiment shown in c of FIG. 12, the electronic device 100 may select the right image i_{R} of the original stereo image as a reference image i_{ref}, may determine the left image i_{L} as a synthesis target image, and may obtain the synthesized image i_{synthesized} by performing view synthesis on the synthesis target image.

Referring to the embodiment shown in d of FIG. 12, the electronic device 100 may select both the left image i_{L} and the right image i_{R} from the original stereo image as the synthesis target images and may perform view synthesis. In this case, due to view synthesis, the object included in the left image i_{L} may be shifted in the left direction, and the object included in the right image i_{R} may be shifted in the right direction and synthesized.

Referring to the embodiment shown in e of FIG. 12, the electronic device 100 may select the left image i_{L} of the original stereo image as a reference image, may determine the right image i_{R} as a synthesis target image, and may perform view synthesis on both the reference image and the synthesis target image, thereby obtaining the left synthesized image i_{L-synthesized} and the right synthesized image i_{R-synthesized}. In an embodiment of the present disclosure, the first distance by which the object included in the right image i_{R} determined as the synthesis target image due to view synthesis is shifted may be longer than the second distance by which the object included in the left image i_{L} selected as the reference image is shifted.

Referring to the embodiment shown in f of FIG. 12, the electronic device 100 may select the right image i_{R} of the original stereo image as a reference image, may determine the left image i_{L} as a synthesis target image, and may obtain the left synthesized image i_{L-synthesized} and the right synthesized image i_{R-synthesized} by performing view synthesis on both the reference image and the synthesis target image. In an embodiment of the present disclosure, the first distance by which the object included in the left image i_{L} determined as the synthesis target image due to view synthesis is shifted may be longer than the second distance by which the object included in the right image i_{R} selected as the reference image is shifted.

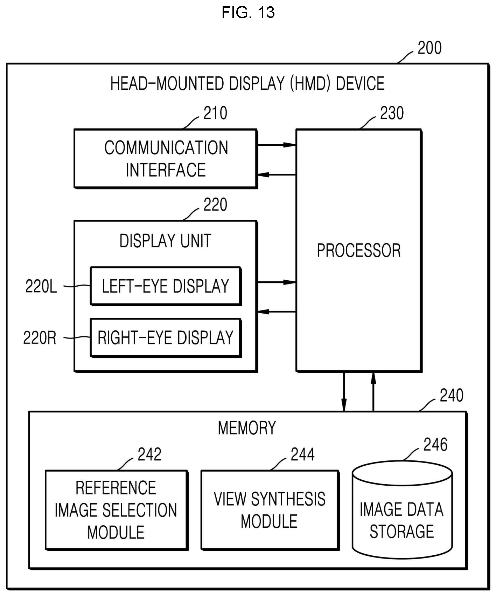

FIG. 13 is a block diagram illustrating components of the HMD device 200 according to an embodiment of the present disclosure.

The HMD device 200 shown in FIG. 13 is a device worn on a user's head and provides a VR experience to the user. In FIG. 13, the HMD device 200 is illustrated, but the present disclosure is not limited thereto. In an embodiment of the present disclosure, the HMD device 200 may be replaced with an AR helmet providing an AR experience, a face mounted display (FMD) device worn on a user's face, or an AR glass in the form of glasses.

Referring to FIG. 13, the HMD device 200 may include a communication interface 210, a display unit 220, a processor 230, and memory 240. The communication interface 210, the display unit 220, the processor 230, and the memory 240 may be electrically and/or physically connected to each other. FIG. 13 illustrates only essential components for describing functions and/or operations of the HMD device 200, and the components included in the HMD device 200 are not limited to those shown in FIG. 13. In an embodiment of the present disclosure, the HMD device 200 may further include a battery for supplying driving power to the communication interface 210, the display unit 220, and the processor 230. In an embodiment of the present disclosure, the HMD device 200 may further include a camera for capturing an object of a real scene. The camera may include, for example, a left-eye camera arranged adjacent to the left-eye display 220L and a right-eye camera arranged adjacent to the right-eye display 220R. However, the present disclosure is not limited thereto, and the camera may include three or more cameras.

The communication interface 210 is a hardware device configured to perform data communication with an external device and/or a server. The communication interface 210 may be configured as a device that performs data communication with an external device or a server by using at least one of data communication methods including, for example, wireless LAN, Wi-Fi, Wi-Fi Direct, Bluetooth, Bluetooth low energy (BLE), infrared Data Association (IrDA), near field communication (NFC), wireless broadband internet (WiBro), world interoperability for microwave access (WiMAX), shared wireless access protocol (SWAP), wireless gigabit Alliance (WiGig), and radio frequency (RF) communication. The external device is a device connected to the HMD device 200 through a communication network, and may be, for example, a mobile device such as a smart phone or a tablet PC.

In an embodiment of the present disclosure, the communication interface 210 may be connected to a mobile device (e.g., the electronic device 100 (see FIGS. 3 and 4) under the control of the processor 230, and may transmit and receive data. The communication interface 210 may be paired with the electronic device 100 through a short-range wireless communication network, for example, Bluetooth, BLE, or Wi-Fi direct, and may receive a stereo image including the first image and the second image from the electronic device 100. However, the present disclosure is not limited thereto, and in an embodiment of the present disclosure, the HMD device 200 may obtain a stereo image including a left-eye image and a right-eye image by photographing an object by using a camera.

The display unit 220 is configured to display a reference image and a synthesized image. The display unit 220 may include a left-eye display 220L for displaying an image toward the user's left eye and a right-eye display 220R for displaying an image toward the user's right eye. The left-eye display 220L and the right-eye display 220R may be arranged to be spaced apart from each other by a second baseline. The "second baseline" is an average value of distances between the left eye and the right eye of the user, and may be, for example, 6.5 cm. However, the present disclosure is not limited thereto.

The left-eye display 220L and the right-eye display 220R may be configured as at least one of a liquid crystal display, a thin film transistor-liquid crystal display, an organic light-emitting diode, a flexible display, a three-dimensional (3D) display, and an electrophoretic display. For example, when the HMD device 200 is implemented as AR glasses, the left-eye display 220L and the right-eye display 220R may be configured as a lens optical system, and may include a waveguide and an optical engine. The optical engine may be configured as a projector that generates light of a virtual object configured as a virtual image and projects the light onto a waveguide. The optical engine may include, for example, an image panel, an illumination optical system, a projection optical system, and the like. In an embodiment of the present disclosure, the optical engine may display a reference image and a synthesized image by generating light of image data of each of the reference image and the synthesized image and projecting the light onto the waveguide.

The processor 230 may execute one or more instructions of a program stored in the memory 240. The processor 230 may be configured as a hardware component that performs arithmetic, logic, and input/output operations and image processing. In FIG. 13, the processor 230 is illustrated as one element, but is not limited thereto. In an embodiment of the present disclosure, the processor 230 may include one or more elements.

The processor 230 may include various types of processing circuitry and/or a plurality of processors. For example, the term "processor" used in the present disclosure including the claims may include various types of processing circuitry including at least one processor. The at least one processor and the one or more processors may be configured to individually and/or collectively perform the various functions described herein, in a distributed form. As used herein, the "processor", the "at least one processor", and the "one or more processors" may be configured to perform various functions. However, the recited terms cover a situation in which one processor performs a part of functions and other processor(s) performs the other part of the functions, and a situation in which one processor may perform all functions. In addition, the at least one processor may include a combination of processors configured to perform a variety of the disclosed functions in a distributed manner. The at least one processor may execute program instructions to achieve or perform various functions.

The processor 230 may be implemented as, for example, a general-purpose processor such as a central processing unit (CPU), an application processor (AP), a digital signal processor (DSP), etc., a graphic-dedicated processor such as a graphic processing unit (GPU), a vision processing unit (VPU), etc., or an artificial intelligence-dedicated processor such as a neural processing unit (NPU). The processor 230 may control input data to be processed according to a predefined operation rule or an artificial intelligence model. Alternatively, when the processor 230 is an artificial intelligence dedicated processor, the artificial intelligence dedicated processor may be designed with a hardware structure specialized for processing a specific artificial intelligence model.

The memory 240 may be configured as at least one type of storage medium among, for example, a flash memory type, a hard disk type, a multimedia card micro type, a card type memory (e.g., SD or XD memory, etc.), a random access memory (RAM), a static random access memory (SRAM), a Read-Only Memory (ROM), an electrically erasable programmable read-only memory (EEPROM), a programmable read-only memory (PROM), and an optical disk.

The memory 240 may store instructions related to functions and/or operations of the HMD device 200 selecting a reference image from a stereo image, determining a synthesis target image, and performing view synthesis on the synthesis target image. In an embodiment of the present disclosure, the memory 240 may store at least one of instructions, an algorithm, a data structure, a program code, and an application program which may be read by the processor 230. The instructions, the algorithm, the data structure, and the program code stored in the memory 240 may be implemented with any programming or scripting language such as C, C++, Java, assembler, or the like.

The memory 240 may store instructions, algorithms, data structures, or program codes related to a reference image selection module 242 and a view synthesis module 244. The "module" included in the memory 240 indicates a unit for processing a function or an operation performed by the processor 130, and may be implemented as software such as instructions, algorithms, data structures, or program code. In an embodiment of the present disclosure, the memory 240 may include an image data storage 246.

The processor 230 may be implemented by executing the instructions or the program codes stored in the memory 240. Hereinafter, functions and/or operations that the processor 230 performs by executing the instructions or the program code of each of the plurality of modules stored in the memory 240 will be described in detail.

The processor 230 may receive stereo images including a first image and a second image from an external device, for example, the electronic device 100 (see FIGS. 3 and 4), and may determine the received first image as a left-eye image to be displayed through the left-eye display 220L and the second image as a right-eye image to be displayed through the right-eye display 220R. However, the present disclosure is not limited thereto, and the processor 230 may determine the first image as a right-eye image to be displayed through the right-eye display 220R, and may determine the second image as a left-eye image to be displayed through the left-eye display 220L.

The reference image selection module 242 includes instructions or program code for executing a function and/or an operation of selecting a reference image for view synthesis among a plurality of images constituting a stereo image. As the function and/or operation of the reference image selection module 242 shown in FIG. 13 is the same as the reference image selection module 142 (see FIG. 4) shown in FIG. 4, descriptions overlapping with the description of the reference image selection module 142 are omitted here. The processor 230 may select any one of the received stereo images as a reference image by executing instructions or program code of the reference image selection module 242.

The processor 230 may select a reference image from a stereo image, based on photographing direction information regarding whether the electronic device 100 is held in a vertical direction or a horizontal direction when photographing to obtain a stereo image, and arrangement information of the plurality of cameras 111 and 112 (see FIGS. 3 and 4) included in the electronic device 100. In an embodiment of the present disclosure, the processor 230 may receive information about the photographing direction of the electronic device 100 from the electronic device 100 through the communication interface 210. In an embodiment of the present disclosure, the processor 230 may receive, from the electronic device 100, arrangement information about in which direction and in which position on the electronic device 100 the plurality of cameras 111 and 112 are arranged through the communication interface 210. However, the present disclosure is not limited thereto, and the arrangement information of the plurality of cameras 111 and 112 included in the electronic device 100 may be stored in advance in the memory 240 of the HMD device 200.

The processor 230 may recognize the photographing direction of the electronic device 100, based on the information about the photographing direction received from the electronic device 100. For example, when the electronic device 100 is held by the user and performs photographing in a horizontal direction, the processor 230 may recognize a photographing direction regarding whether photographing is performed in a direction in which the plurality of cameras 111 and 112 included in the electronic device 100 lean to the left or whether photographing is performed in a direction in which the plurality of cameras 111 and 112 lean to the right, based on the information about the photographing direction and the arrangement information of the plurality of cameras 111 and 112. The processor 230 may select a reference image that is a reference for view synthesis among the left-eye image and the right-eye image, based on the recognized photographing direction and the arrangement information of the plurality of cameras 111 and 112 included in the electronic device 100. The processor 230 may determine, as the synthesis target image, the remaining image that is not selected as the reference image among the left-eye image and the right-eye image.

The processor 230 may recognize a main object from at least one of the stereo images and may select a reference image based on position information of the main object in the image. In an embodiment of the present disclosure, the processor 230 may recognize at least one object from at least one image among the left-eye image and the right-eye image by performing image segmentation, and may determine the main object, based on at least one of a position, a direction, a size, a depth, and a movement of the recognized at least one object. The processor 230 may determine a reference image and a synthesis target image, based on position information about where the main object is positioned in the left-eye image and the right-eye image. In an embodiment of the present disclosure, when the main object is positioned to be biased in the first direction with respect to the center of the image, the processor 230 may select, as the reference image, an image in which the main object is arranged close to the center of the image among the left-eye image and the right-eye image, and may determine, as the synthesis target image, the remaining image that is not selected as the reference image among the left-eye image and the right-eye image. For example, when the main object is positioned to be biased to the left in the image, the processor 130 may select, as the reference image, an image in which the main object is arranged closest to the center of the image among the left-eye image and the right-eye image, and may determine the left-eye image as the synthesis target image. In an opposite example, when the main object is positioned to be biased to the right in the image, the processor 130 may determine the right-eye image as the synthesis target image.

The view synthesis module 244 includes instructions or program code for executing a function and/or an operation of obtaining a synthesized image by performing view synthesis on a synthesis target image based on depth information of an object. As the function and/or operation of the view synthesis module 244 is the same as the view synthesis module 144 (see FIG. 4) shown in FIG. 4, descriptions overlapping with the description of the view synthesis module 144 are omitted here. The processor 230 may perform view synthesis on the synthesis target image and obtain a synthesized image by executing the instructions or program code of the view synthesis module 244.

As the plurality of cameras 111 and 112 included in the electronic device 100 are arranged to be spaced apart from each other by the first baseline, the first image (left-eye image) obtained through the first camera 111 of the electronic device 100 and the second image (right-eye image) obtained through the second camera 112 may have a disparity corresponding to the first baseline. As the left-eye display 220L and the right-eye display 220R of the HMD device 200 are spaced apart from each other by the second baseline (e.g., 6.5 cm), when the left-eye image and the right-eye image are displayed through the left-eye display 220L and the right-eye display 220R, the user may feel the sense of depth different from the sense of depth of the real-world object, and thus, the user's sense of immersion may deteriorate. The processor 230 may perform view synthesis on the synthesis target image based on depth information of an object, and thus, may obtain a synthesized image including an object having a depth value due to a disparity corresponding to the second baseline that is the distance between the left-eye display 220L and the right-eye display 220R. In an embodiment of the present disclosure, the processor 230 may perform the view synthesis in which the object of the synthesis target image is shifted to allow the object included in the synthesis target image and the object included in the reference image to have a depth value according to the disparity corresponding to the second baseline, and the shifted object is synthesized with the background. As a particular method by which the processor 230 performs view synthesis is the same as the method performed by the processor 140 described with reference to FIGS. 4 to 12, redundant descriptions are omitted here.

The processor 230 may display, through the display unit 220, a stereo image including a reference image and a synthesized image. In an embodiment of the present disclosure, the processor 230 may display a reference image through the left-eye display 220L, and may display a synthesized image through the right-eye display 220R. However, the present disclosure is not limited thereto, and in an embodiment of the present disclosure, the processor 230 may display the synthesized image through the left-eye display 220L and may display the reference image through the right-eye display 220R.

The image data storage 246 is a storage device in the memory 240 which stores a stereo image received from the electronic device 100 or stereo images obtained in advance through a network such as a website. However, the present disclosure is not limited thereto, and the image data storage 246 may store an image obtained by photographing an object by using a camera included in the HMD device 200.

The image data storage 246 may be configured as non-volatile memory. The non-volatile memory refers to a storage medium that may store and maintain information even in a state in which power is not supplied, and may use the stored information again when power is supplied. The non-volatile memory may include, for example, at least one of a flash memory, a hard disk, a solid state drive (SSD), a multimedia card micro type memory, a card type memory (e.g., SD or XD memory), a read-only memory (ROM), a magnetic memory, a magnetic disk, and an optical disk.

Although the image data storage 246 is illustrated as a component included in the memory 240 in FIG. 13, the present disclosure is not limited to that shown in the drawings. In an embodiment of the present disclosure, the image data storage 246 may be configured as a database in the HMD device 200, which is a separate component from the memory 240.

However, the present disclosure is not limited thereto, and in an embodiment of the present disclosure, the image data storage 246 may be implemented as a web storage or a cloud server which is accessible through a network and performs a storage function. In this case, the HMD device 200 may be communicatively connected to a web storage or a cloud server through the communication interface 210, and may perform data transmission and reception. The processor 230 may receive the stereo images from the web storage or the cloud server.

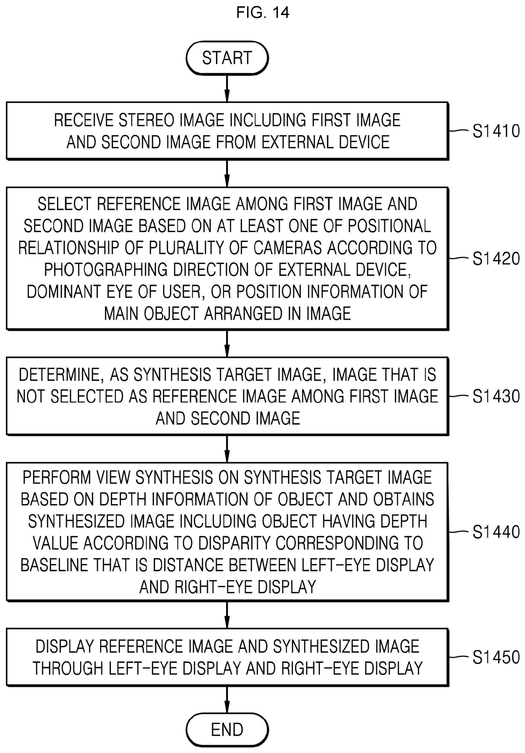

FIG. 14 is a flowchart illustrating a method, performed by the HMD device 200, of performing view synthesis on a stereo image, according to an embodiment of the present disclosure.

In operation S1410, the HMD device 200 receives a stereo image including a first image and a second image from an external device. In an embodiment of the present disclosure, the external device may be a mobile device such as a smart phone or a tablet PC. For example, the external device may be the electronic device 100 shown in FIGS. 3 and 4. In an embodiment of the present disclosure, the HMD device 200 may be paired with the electronic device 100 through a short-range wireless communication network, for example, Bluetooth, BLE, or Wi-Fi direct, and may receive a stereo image from the electronic device 100. The HMD device 200 may determine a first image of the received stereo image as a left-eye image to be displayed through the left-eye display and a second image as a right-eye image to be displayed through the right-eye display.

However, operation S1410 is not limited to receiving a stereo image from an external device (e.g., the electronic device 100 (see FIGS. 3 and 4)). In an embodiment of the present disclosure, the HMD device 200 may further include a camera, and may obtain a stereo image including a left-eye image and a right-eye image by photographing an object by using the camera.

In operation S1420, the HMD device 200 selects a reference image among the first image and the second image based on at least one of a positional relationship of a plurality of cameras according to a photographing direction of an external device (e.g., the electronic device 100 (see FIGS. 3 and 4)), a dominant eye of a user, or position information of a main object arranged in an image. A particular method by which the processor 230 (see FIG. 13) of the HMD device 200 recognizes a photographing direction of the electronic device 100 and selects a reference image from a stereo image, based on the recognized photographing direction and arrangement information of a plurality of cameras included in the electronic device 100 is the same as that described with reference to FIG. 13, and thus, redundant descriptions are omitted here. A particular method by which the processor 230 (see FIG. 13) of the HMD device 200 recognizes a main object from an image and selects a reference image among stereo images based on position information of the main object is the same as that described with reference to FIG. 13, and thus, redundant descriptions are omitted here.

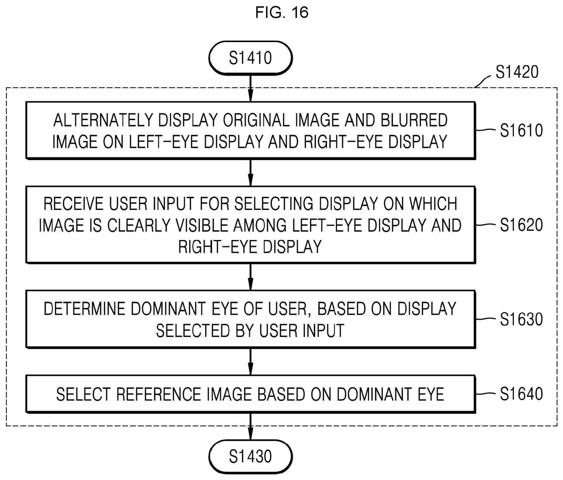

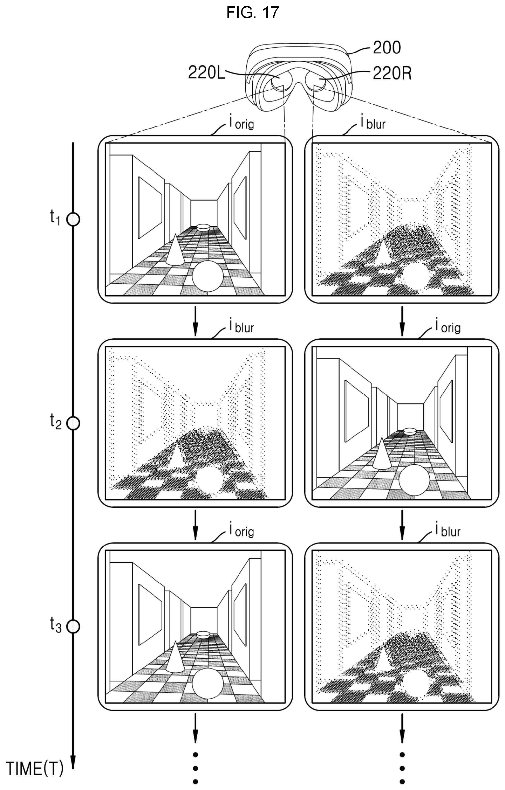

The HMD device 200 may display a simulation image through the left-eye display 220L (see FIG. 17) and the right-eye display 220R (see FIG. 17) and may receive a user input, thereby determining a dominant eye of the user. A particular embodiment in which the HMD device 200 determines the dominant eye of the user and determines the reference image and the synthesis target image among the stereo images based on the determined dominant eye will be described in detail with reference to FIGS. 16 and 17.

In operation S1430, the HMD device 200 determines, as a synthesis target image, an image that is not selected as the reference image among the first image and the second image.

In operation S1440, the HMD device 200 performs view synthesis on the synthesis target image based on depth information of an object and obtains a synthesized image including an object having a depth value according to a disparity corresponding to a baseline that is a distance between the left-eye display and the right-eye display. A particular method, performed by the processor 230 (see FIG. 13) of the HMD device 200, of obtaining a synthesized image by performing view synthesis on a synthesis target image based on a disparity corresponding to the second baseline between the left-eye display 220L and the right-eye display 220R is the same as that described with reference to FIG. 13, and thus, redundant descriptions are omitted here.

In operation S1450, the HMD device 200 displays the reference image and the synthesized image through the left-eye display 220L and the right-eye display 220R. In an embodiment of the present disclosure, the HMD device 200 may display the reference image on the left-eye display 220L and may display the synthesized image on the right-eye display 220R. However, the present disclosure is not limited thereto, and in an embodiment of the present disclosure, the HMD device 200 may display the reference image on the right-eye display 220R and may display the synthesized image on the left-eye display 220L.

Unlike the embodiments shown in FIGS. 1 to 12, the embodiment shown in FIGS. 13 and 14 may be a subject of performing an operation in which the HMD device 200 selects a reference image among stereo images received from the electronic device 100, determines a synthesis target image, and obtains a synthesized image by performing view synthesis on the synthesis target image. Also, the HMD device 200 may display the synthesized image and the reference image obtained by performing view synthesis by itself through the display unit 220. By doing so, the HMD device 200 according to an embodiment of the present disclosure provides a technical effect of allowing the user to feel the same sense of depth as that of the real-world object and improving the user's sense of immersion in viewing the image content.

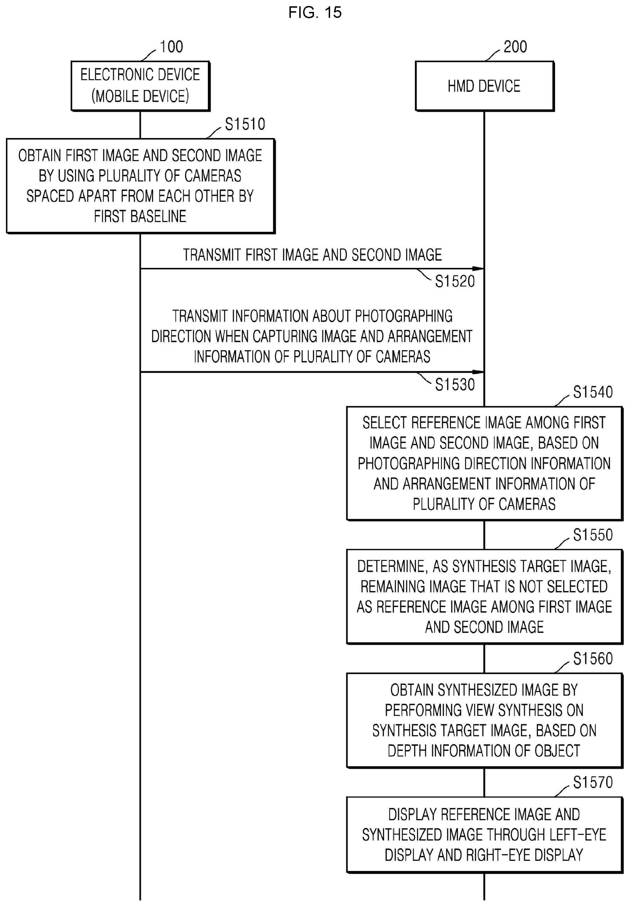

FIG. 15 is a flowchart illustrating an operating method of the electronic device 100 and the HMD device 200 according to an embodiment of the present disclosure.

Referring to FIG. 15, the HMD device 200 may receive information about a photographing direction and position information of a plurality of cameras from the electronic device 100, may determine a reference image and a synthesis target image among stereo images (including a first image and a second image), based on the received information about the photographing direction and position information of the plurality of cameras, and may perform view synthesis on the synthesis target image. Hereinafter, this will be described in detail.

The electronic device 100 may be, for example, a mobile device such as a smart phone or a tablet PC.

In operation S1510, the electronic device 100 may obtain the first image and the second image by using the plurality of cameras spaced apart from each other by the first baseline. The plurality of cameras included in the electronic device 100 may be stereo cameras, and the first image and the second image may constitute a stereo image.

In operation S1520, the electronic device 100 transmits the first image and the second image to the HMD device 200. In an embodiment of the present disclosure, the electronic device 100 may be paired with the HMD device 200 through a short-range wireless communication network, for example, Bluetooth, BLE, or Wi-Fi Direct, and may transmit the stereo image including the first image and the second image to the HMD device 200.

In operation S1530, the electronic device 100 transmits information about a photographing direction when capturing an image and arrangement information of the plurality of cameras to the HMD device 200. In an embodiment of the present disclosure, the electronic device 100 may transmit, to the HMD device 200, photographing direction information about whether the electronic device 100 is held by the user in a vertical direction or a horizontal direction when photographing, and when the electronic device 100 is being held in the horizontal direction, whether the electronic device 100 is held in a direction in which the plurality of cameras lean in a left direction or in a direction in which the plurality of cameras lean in a right direction. In this case, the electronic device 100 may transmit the arrangement information of the plurality of cameras to the HMD device 200 together with the photographing direction information. However, the present disclosure is not limited thereto, and in an embodiment of the present disclosure, the HMD device 200 may obtain the arrangement information of the plurality of cameras included in the electronic device 100 in advance, and the electronic device 100 may not transmit the arrangement information of the plurality of cameras to the HMD device 200.

In operation S1540, the HMD device 200 selects a reference image among the first image and the second image, based on the photographing direction information and the arrangement information of the plurality of cameras.

In operation S1550, the HMD device 200 determines, as the synthesis target image, the remaining image that is not selected as the reference image among the first image and the second image.

In operation S1560, the HMD device 200 obtains a synthesized image by performing view synthesis on the synthesis target image, based on the depth information of the object.

In operation S1570, the HMD device 200 displays the reference image and the synthesized image through the left-eye display and the right-eye display.

A detailed method performed by the HMD device 200 shown in operations S1540 to S1570 is the same as the method described in FIGS. 13 and 14, and thus, redundant descriptions are omitted here.

FIG. 16 is a flowchart illustrating a method, performed by the HMD device 200, of selecting a reference image for view synthesis based on a dominant eye of a user, according to an embodiment of the present disclosure.

Operations S1610 to S1640 shown in FIG. 16 correspond to operation S1420 shown in FIG. 14. Operation S1610 shown in FIG. 16 may be performed after operation S1410 of FIG. 14 is performed.

In operation S1610, the HMD device 200 alternately displays the original image and the blurred image on the left-eye display and the right-eye display.

FIG. 17 is a diagram illustrating an operation in which the HMD device 200 determines a dominant eye of a user by displaying a simulation image, according to an embodiment of the present disclosure. Referring to operation S1610 of FIG. 16 together with the embodiment shown in FIG. 17, the HMD device 200 may display a virtual simulation image implemented by software so as to determine a dominant eye of the user. The simulation image may include an original image and a blurry image that is blurred. In an embodiment of the present disclosure, the HMD device 200 may display the same image through the left-eye display 220L and the right-eye display 220R, but may display the original image i_{orig} on any one display unit of the left-eye display 220L and the right-eye display 220R, and may display, on the other display unit, a blurry image i_{blur} that is blurred.

In the simulation image, the original image and the blurred image may be alternately displayed through the left-eye display 220L and the right-eye display 220R over time. For example, the HMD device 200 may display the original image i_{orig} through the left-eye display 220L and may display the blur image i_{blur} through the right-eye display 220R at a first time point t₁. At a second time point t₂, the HMD device 200 may display the blur image i_{blur} through the left-eye display 220L and may display the original image i_{orig} through the right-eye display 220R. At a third time point t₃, the HMD device 200 may display the original image i_{orig} through the left-eye display 220L and may display the blur image i_{blur} through the right-eye display 220R.

Referring back to FIG. 16, in operation S1620, the HMD device 200 receives a user input for selecting a display on which an image is clearly visible among the left-eye display and the right-eye display. Referring to the embodiment shown in FIG. 17 together, the HMD device 200 may alternately display the original image i_{orig} and the blurred image i_{blur} through the left-eye display 220L and the right-eye display 220R over time, and may output a query message asking the user whether the image displayed on which display is more clearly seen. The HMD device 200 may receive a user's response to the query message through a user's hand gesture, a touch input, or a voice input. However, the present disclosure is not limited thereto, and the HMD device 200 may receive the user's response through any known method.

Referring to operation S1630 of FIG. 16, the HMD device 200 determines a dominant eye of the user, based on a display selected by the user input. In the present disclosure, a "dominant eye" refers to an eye that is mainly dependent on visual information among both eyes of a person. Conversely, an eye that is not mainly responsible for the visual information is referred to as auxiliary eye. In an embodiment of the present disclosure, the HMD device 200 may determine any one display, based on the user's response to a display in which an image is more clearly visible among the left-eye display 220L (see FIG. 17) and the right-eye display 220R (see FIG. 17). The HMD device 200 may determine a dominant eye of the user, based on the selected display.

In operation S1640, the HMD device 200 selects a reference image based on the dominant eye. For example, when the dominant eye of the user is the left eye, the HMD device 200 may select a left-eye image displayed through the left-eye display 220L as the reference image. In the opposite example, when the dominant eye of the user is the right eye, the HMD device 200 may select the right-eye image displayed through the right-eye display 220R as the reference image.

In general, when an image viewed through a dominant eye among both eyes of a user is clear, the clarity of the image viewed through both eyes highly increases. The HMD device 200 according to the embodiment shown in FIGS. 16 and 17 determines a dominant eye of a user through a simulation image, selects a reference image based on the dominant eye, determines the remaining image not selected as the reference image among the binocular images as a synthesis target image, and performs view synthesis on the determined synthesis target image, and thus, a synthesized image having an artifact is used to express the sense of depth, thereby providing a technical effect that allows the user to clearly feel the entire image viewed through both eyes.

The present disclosure provides the electronic device 100 for performing view synthesis. The electronic device 100 according to an embodiment of the present disclosure may include the plurality of cameras 111 and 112 arranged to be spaced apart from each other by a first baseline, the communication interface 150 configured to perform data communication with an external device, the processor 130 including processing circuitry, and the memory 140 configured to store one or more instructions. The one or more instructions, when executed by the at least one processor 130 individually or collectively, may cause the electronic device 100 to obtain a first image and a second image by photographing an object by using the plurality of cameras 111 and 112. The one or more instructions, when executed by the at least one processor 130 individually or collectively, may cause the electronic device 100 to select a reference image among the first image and the second image, based on a positional relationship of the plurality of cameras 111 and 112 according to a photographing direction of a user when photographing the object or position information of a main object arranged in the image. The one or more instructions, when executed by the at least one processor 130 individually or collectively, may cause the electronic device 100 to determine, as the synthesis target image, a remaining image that is not selected as the reference image among the first image and the second image. The one or more instructions, when executed by the at least one processor 130 individually or collectively, may cause the electronic device 100 to perform view synthesis on the synthesis target image, based on the depth information of the object, and obtain a synthesized image including an object having a depth value according to a disparity corresponding to a second baseline that is a distance between the left-eye display 220L and the right-eye display 220R of the external device 200. The one or more instructions, when executed by the at least one processor 130 individually or collectively, may cause the electronic device 100 to control the communication interface 150 to transmit the reference image and the synthesized image to the external device 200 so that the reference image and the synthesized image are displayed by the external device 200.

In an embodiment of the present disclosure, the electronic device 100 may further include the gravity sensor configured to obtain a measurement value regarding a gravity direction, by detecting gravity. The one or more instructions, when executed by the at least one processor 130 individually or collectively, may cause the electronic device 100 to recognize, based on the measurement value obtained by the gravity sensor, a photographing direction according to a posture in which the electronic device is held by a user during photographing. The one or more instructions, when executed by the at least one processor 130 individually or collectively, may cause the electronic device 100 to obtain information about the positional relationship of the plurality of cameras 111 and 112, based on the recognized photographing direction and the arrangement information of the plurality of cameras 111 and 112 on the electronic device 100. The one or more instructions, when executed by the at least one processor 130 individually or collectively, may cause the electronic device 100 to select a reference image among the first image and the second image, based on information about the positional relationship of the plurality of cameras 111 and 112.

In an embodiment of the present disclosure, the one or more instructions, when executed by the at least one processor 130 individually or collectively, may cause the electronic device 100 to identify, based on the information about the positional relationship of the plurality of cameras 111 and 112, a camera arranged farthest from the center line of the electronic device 100 among the plurality of cameras 111 and 112, and select, as the reference image, an image captured by the identified camera among the first image and the second image.

In an embodiment of the present disclosure, the one or more instructions, when executed by the at least one processor 130 individually or collectively, may cause the electronic device 100 to perform, when the plurality of cameras 111 and 112 are positioned to be biased in the first direction with respect to the center line of the electronic device 100, view synthesis in which the object of the synthesis target image is shifted and synthesized according to the second direction opposite to the first direction so as to allow the object included in the reference image and the object included in the synthesized image to have a disparity corresponding to the second baseline.

In an embodiment of the present disclosure, the one or more instructions, when executed by the at least one processor 130 individually or collectively, may cause the electronic device 100 to recognize, by performing image segmentation, at least one object from at least one image among the first image and the second image, and determine a main object based on at least one of a position, a direction, a size, a depth, and a movement of the recognized at least one object. The one or more instructions, when executed by the at least one processor 130 individually or collectively, may cause the electronic device 100 to select a reference image among the first image and the second image, based on position information in which the main object is arranged in the image.

In an embodiment of the present disclosure, the one or more instructions, when executed by the at least one processor 130 individually or collectively, may cause the electronic device 100 to select, as the reference image, an image in which the main object is arranged closest to the center of the image among the first image and the second image when the main object is positioned to be biased in the first direction with respect to the center of the image.

In an embodiment of the present disclosure, the one or more instructions, when executed by the at least one processor 130 individually or collectively, may cause the electronic device 100 to obtain a synthesized image by shifting and synthesizing an object in the synthesis target image in the second direction, which is opposite to the first direction, so as to allow the object included in the reference image and the object included in the synthesized image to have a disparity corresponding to the second baseline.

In an embodiment of the present disclosure, the external device 200 may be a HMD device, and the reference image and the synthesized image may be displayed by the left-eye display 220L and the right-eye display 220R of the HMD device, respectively.

In an embodiment of the present disclosure, the one or more instructions, when executed by the at least one processor 130 individually or collectively, may cause the electronic device 100 to obtain a first synthesized image by performing view synthesis by shifting an object included in a synthesis target image in a first direction so as to allow the object to have a depth value according to a disparity corresponding to a second baseline, and obtain a second synthesized image by performing view synthesis by shifting an object included in a reference image in a second direction opposite to the first direction.

In an embodiment of the present disclosure, a first distance by which the object of the synthesis target image is shifted in the first direction may be greater than a second distance by which the object of the reference image is shifted in the second direction.

The present disclosure provides a method, performed by the electronic device 100, of performing view synthesis. An operating method of the electronic device 100 according to an embodiment of the present disclosure may include obtaining a stereo image including a first image and a second image by photographing an object by using the plurality of cameras 111 and 112 spaced apart from each other by a first baseline (S210). The operating method of the electronic device 100 according to an embodiment of the present disclosure may include selecting a reference image among the first image and the second image, based on a positional relationship of the plurality of cameras 111 and 112 according to a photographing direction of the user when photographing the object or position information of a main object arranged in a image (S220). The operating method of the electronic device 100 according to an embodiment of the present disclosure may include determining, as the synthesis target image, a remaining image that is not selected as the reference image among the first image and the second image (S230). The operating method of the electronic device 100 according to an embodiment of the present disclosure may include performing view synthesis on a synthesis target image based on depth information of an object and obtaining a synthesized image including an object having a depth value according to a disparity corresponding to a second baseline that is a distance between a left-eye display and a right-eye display of the external device 200 (S240). The operating method of the electronic device 100 according to an embodiment of the present disclosure may include transmitting the reference image and the synthesized image to the external device 200 so that the reference image and the synthesized image are displayed by the external device 200 (S250).

In an embodiment of the present disclosure, the electronic device 100 may further include the gravity sensor configured to obtain a measurement value regarding a direction of gravity by detecting gravity. Operation S220 of selecting the reference image may include operation S510 of recognizing, based on the measurement value obtained by the gravity sensor, a photographing direction according to a posture in which the electronic device 100 is held by the user during photographing, and operation S520 of obtaining information about a positional relationship of the plurality of cameras 111 and 112 based on the recognized photographing direction and arrangement information of the plurality of cameras 111 and 112 on the electronic device 100. Operation S220 of selecting the reference image may include operation of selecting the reference image among the first image and the second image, based on information about the positional relationship between the plurality of cameras 111 and 112.

In an embodiment of the present disclosure, operation S220 of selecting the reference image may include operation S530 of identifying, based on information about the positional relationship of the plurality of cameras 111 and 112, a camera arranged farthest from the center line of the electronic device 100 among the plurality of cameras 111 and 112. Operation S220 of selecting the reference image may include operation S540 of selecting, as the reference image, an image captured by the identified camera among the first image and the second image.

In an embodiment of the present disclosure, in operation of obtaining the synthesized image (S240), when the plurality of cameras 111 and 112 are positioned to be biased in the first direction with respect to the center line of the electronic device 100, the electronic device 100 may perform view synthesis in which the object of the synthesis target image is shifted in the second direction opposite to the first direction so as to allow the object included in the reference image and the object included in the synthesized image to have a disparity corresponding to the second baseline.

In an embodiment of the present disclosure, operation S220 of selecting the reference image may include operation S710 of recognizing at least one object from at least one image among the first image and the second image by performing image segmentation, and operation S720 of determining a main object based on at least one of a position, a direction, a size, a depth, and a movement of the at least one recognized object. Operation S220 of selecting the reference image may include operation S730 of selecting the reference image among the first image and the second image, based on the position information in which the main object is arranged in the image.

In an embodiment of the present disclosure, in operation S220 of selecting the reference image, when the main object is positioned to be biased in the first direction with respect to the center of the image, the electronic device 100 may select, as the reference image, an image in which the main object is arranged closest to the center of the image among the first image and the second image.

In an embodiment of the present disclosure, in operation S240 of obtaining the synthesized image, the electronic device 100 may obtain the synthesized image by shifting and synthesizing the object in the synthesis target image in the second direction, which is the opposite direction of the first direction, so as to allow the object included in the reference image and the object included in the synthesized image to have a disparity corresponding to the second baseline.

In an embodiment of the present disclosure, in operation S240 of obtaining the synthesized image, the electronic device 100 may obtain a first synthesized image by performing view synthesis by shifting the object included in the synthesis target image in the first direction so as to allow the object to have a depth value according to a disparity corresponding to the second baseline, and obtain a second synthesized image by performing view synthesis by shifting the object included in the reference image in the second direction opposite to the first direction.

In an embodiment of the present disclosure, a first distance by which the object of the synthesis target image is shifted in the first direction may be greater than a second distance by which the object of the reference image is shifted in the second direction.

The present disclosure provides the HMD device 200 for performing view synthesis. The HMD device 200 according to an embodiment of the present disclosure may include the communication interface 210 configured to perform pairing with an external device and perform data communication with the external device, the at least one processor 230 including the left-eye display 220L, the right-eye display 220R, and the processing circuitry, and the memory 240 for storing one or more instructions. The one or more instructions, when executed by the at least one processor 230 individually or collectively, may cause the HMD device 200 to control the communication interface 210 to receive a stereo image including a first image and a second image obtained by the plurality of cameras 111 and 112 included in the external device. The one or more instructions, when executed by the at least one processor 230 individually or collectively, may cause the HMD device 200 to select a reference image among the first image and the second image, based on at least one of a positional relationship between the plurality of cameras 111 and 112 according to a photographing direction of the external device, a dominant eye of a user, or position information of a main object arranged in an image. The one or more instructions, when executed by the at least one processor 230 individually or collectively, may cause the HMD device 200 to determine, as the synthesis target image, a remaining image that is not selected as the reference image among the first image and the second image. The one or more instructions, when executed by the at least one processor 230 individually or collectively, may cause the HMD device 200 to perform view synthesis on a synthesis target image based on depth information of the object and obtain a synthesized image including an object having a depth value different from a disparity corresponding to a baseline. The one or more instructions, when executed by the at least one processor 230 individually or collectively, may cause the HMD device 200 to display the reference image and the synthesized image through the left-eye display 220L and the right-eye display 220R.

The program to be executed by the electronic device 100 described in the present disclosure may be implemented as a hardware component, a software component, and/or a combination of the hardware component and the software component. The program may be performed by any system capable of executing computer-readable instructions.

The software may include a computer program, code, an instruction, or one or more combinations thereof, and may configure a processing device to operate as desired or may independently or collectively instruct the processing device.

The software may be implemented as a computer program including instructions stored in computer-readable storage media. Examples of the computer-readable recording medium include magnetic storage media (e.g., read-only memory (ROM), random-access memory (RAM), floppy disks, hard disks, etc.) and optical reading media (e.g., CD-ROM, digital versatile disc (DVD), etc.). The computer-readable recording medium may be distributed over network-connected computer systems such that the computer-readable code is stored and executed in a distributed manner. The medium may be readable by a computer, stored in a memory, and executed in a processor.

The computer-readable storage medium may be provided in the form of a non-transitory storage medium. Here, the term "non-transitory" merely indicates that the storage medium does not include a signal and is tangible, and does not distinguish between cases where data is semi-permanently or temporarily stored in the storage medium. For example, the "non-transitory storage medium" may include a buffer in which data is temporarily stored.

In addition, the program according to the embodiments disclosed in the present specification may be included and provided in a computer program product. The computer program product may be traded between a seller and a buyer as a commodity.

The computer program product may include a software program and a computer-readable storage medium in which the software program is stored. For example, the computer program product may include a product (e.g., a downloadable application) in the form of a software program electronically distributed through the manufacturer of the electronic device 100 or an electronic market (e.g., Samsung Galaxy Store ^{™}). For electronic distribution, at least a portion of the software program may be stored in a storage medium or may be temporarily generated. In this case, the storage medium may be a storage medium of a server of the manufacturer of the electronic device 100, a server of the electronic market, or a relay server temporarily storing the software program.

The computer program product may include a storage medium of a server or a storage medium of the electronic device 100 in a system including the electronic device 100 and/or the server. Alternatively, when there is a third device (e.g., "the HMD device 200 (see FIGS. 3 and 13)") communicatively connected to the electronic device 100, the computer program product may include a storage medium of the third device. Alternatively, the computer program product may include the software program itself transmitted from the electronic device 100 to the third device or transmitted from the third device to the electronic device.

In this case, one of the electronic device 100 or the third device may execute the computer program product to perform the method according to the disclosed embodiments. Alternatively, at least one of the electronic device 100 and the third device may execute the computer program product to perform the methods according to the embodiments of the present disclosure in a distributed manner.

For example, the electronic device 100 may execute the computer program product stored in the memory 140 (see FIG. 4) to control another electronic device (e.g., the "HMD device 200 (see FIGS. 3 and 13)") communicatively connected to the electronic device 100 to perform the method according to the disclosed embodiments.

In another example, the third device (e.g., the "HMD device 200 (see FIGS. 3 and 13)") may execute the computer program product to control the electronic device communicatively connected to the third device to perform the method according to the disclosed embodiment.

When the third device executes the computer program product, the third device may download the computer program product from the electronic device 100 and may execute the downloaded computer program product. Alternatively, the third device may execute the computer program product provided in a pre-loaded state to perform the method according to the disclosed embodiments.

As described above, although the embodiments have been described by limited embodiments and drawings, one of ordinary skill in the art may make various modifications and variations from the above descriptions. For example, even when the described techniques are performed in an order different from the described method, and/or components such as the described computer system or module are combined or combined in a form different from the described method, or replaced or substituted by other components or equivalents, appropriate results may be achieved.

## Claims

1. An electronic device (100) for performing view synthesis, the electronic device (100) comprising:
a plurality of cameras (111, 112) spaced apart by a first baseline;
a communication interface (150) configured to perform data communication with an external device (200);
at least one processor (130) comprising processing circuitry; and
memory (130) storing one or more instructions,
wherein the one or more instructions, when executed by the at least one processor (130) individually or collectively, cause the electronic device (100) to
obtain a first image and a second image by photographing an object by using the plurality of cameras (111, 112),
select a reference image among the first image and the second image, based on a positional relationship of the plurality of cameras according to a photographing direction of a user when photographing the object or position information of a main object arranged in an image,
determine, as a synthesis target image, a remaining image that is not selected as the reference image among the first image and the second image,
perform view synthesis on the synthesis target image, based on depth information of the object, and obtain a synthesized image comprising an object having a depth value according to a disparity corresponding to a second baseline that is a distance between a left-eye display (220L) and a right-eye display (220R) of the external device (200), and
control the communication interface (150) to transmit the reference image and the synthesized image to the external device (200) so that the reference image and the synthesized image are displayed by the external device (200).

2. The electronic device (100) of claim 1, further comprising:
a gravity sensor configured to obtain a measurement value regarding a direction of gravity by detecting the gravity;
wherein the one or more instructions, when executed by the at least one processor (130) individually or collectively, cause the electronic device (100) to
recognize, based on the measurement value obtained by the gravity sensor, a photographing direction according to a posture in which the electronic device is held by the user when photographing, and
obtain information about a positional relationship of the plurality of cameras (111, 112), based on the recognized photographing direction and arrangement information of the plurality of cameras (111, 112) on the electronic device (100), and
select the reference image among the first image and the second image, based on the information about the positional relationship of the plurality of cameras (111, 112).

3. The electronic device (100) of claim 2, wherein
the one or more instructions, when executed by the at least one processor (130) individually or collectively, cause the electronic device (100) to
identify, based on the information about the positional relationship of the plurality of cameras (111, 112), a camera arranged farthest away from a center line of the electronic device (100) among the plurality of cameras (111, 112),
select, as the reference image, an image captured by the identified camera among the first image and the second image, and
when the plurality of cameras (111, 112) are positioned to be biased in a first direction with respect to the center line of the electronic device (100), perform view synthesis in which an object in the synthesis target image is shifted and synthesized in a second direction opposite to the first direction so as to allow an object comprised in the reference image and an object comprised in the synthesized image to have a disparity corresponding to the second baseline.

4. The electronic device (100) of claim 1, wherein
the one or more instructions, when executed by the at least one processor (130) individually or collectively, cause the electronic device (100) to
recognize at least one object from at least one image among the first image and the second image by performing image segmentation,
determine the main object, based on at least one of a position, a direction, a size, a depth, and a movement of the at least one recognized object, and
select the reference image among the first image and the second image, based on the position information in which the main object is arranged in the image.

5. The electronic device (100) of claim 4, wherein
the one or more instructions, when executed by the at least one processor (130) individually or collectively, cause the electronic device (100) to,
when the main object is positioned to be biased in a first direction with respect to a center of the image, select, as the reference image, an image in which the main object is arranged closest to the center of the image among the first image and the second image, and
obtain the synthesized image by shifting and synthesizing an object in the synthesis target image in a second direction opposite to the first direction so as to allow an object comprised in the reference image and an object comprised in the synthesized image to have a disparity corresponding to the second baseline.

6. The electronic device (100) of any one of claims 1 to 5, wherein
the external device (200) is a head-mounted display device, and
the reference image and the synthesized image are displayed by the left-eye display (220L) and the right-eye display (220R) of the head mounted display device, respectively.

7. The electronic device (100) of any one of claims 1 to 6, wherein
the one or more instructions, when executed by the at least one processor (130) individually or collectively, cause the electronic device (100) to
obtain a first synthesized image by performing view synthesis by shifting the object comprised in the synthesis target image in the first direction so as to allow the object to have a depth value according to the disparity corresponding to the second baseline, and obtain a second synthesized image by performing view synthesis by shifting the object comprised in the reference image in the second direction opposite to the first direction.

8. The electronic device (100) of claim 7, wherein
a first distance by which the object in the synthesis target image is shifted in the first direction is greater than a second distance by which the object in the reference image is shifted in the second direction.

9. A method, performed by an electronic device (100), of performing stereo view synthesis, the method comprising:
obtaining a stereo image comprising a first image and a second image by photographing an object by using a plurality of cameras (111, 112) spaced apart from each other by a first baseline (S210);
selecting a reference image among the first image and the second image, based on a positional relationship of the plurality of cameras (111, 112) according to a photographing direction of a user when photographing the object or position information of a main object arranged in an image (S220);
determining, as a synthesis target image, a remaining image that is not selected as the reference image among the first image and the second image (S230);
performing view synthesis on the synthesis target image, based on depth information of the object, and obtaining a synthesized image comprising an object having a depth value according to a disparity corresponding to a second baseline that is a distance between a left-eye display (220L) and a right-eye display (220R) of an external device (200) (S240); and
transmitting the reference image and the synthesized image to the external device (200) so that the reference image and the synthesized image are displayed by the external device (200) (S250).

10. The method of claim 9, wherein
the electronic device (100) comprises a gravity sensor configured to obtain a measurement value regarding a direction of gravity by detecting the gravity, and
the selecting of the reference image (S220) comprises:
recognizing, based on the measurement value obtained by the gravity sensor, a photographing direction according to a posture in which the electronic device (100) is held by the user when photographing (S510); and
obtaining information about a positional relationship of the plurality of cameras (111, 112), based on the recognized photographing direction and arrangement information of the plurality of cameras (111, 112) on the electronic device (100) (S520); and
selecting the reference image among the first image and the second image, based on the information about the positional relationship of the plurality of cameras (111, 112).

11. The method of claim 10, wherein
the selecting of the reference image (S220) comprises:
identifying, based on the information about the positional relationship of the plurality of cameras (111, 112), a camera arranged farthest away from a center line of the electronic device (100) among the plurality of cameras (111, 112), (S530); and
selecting, as the reference image, an image captured by the identified camera among the first image and the second image (S540), and
the obtaining of the synthesized image (S240) comprises,
when the plurality of cameras (111, 112) are positioned to be biased in a first direction with respect to the center line of the electronic device (100), performing view synthesis in which an object in the synthesis target image is shifted and synthesized in a second direction opposite to the first direction so as to allow an object comprised in the reference image and an object comprised in the synthesized image to have a disparity corresponding to the second baseline.

12. The method of claim 9, wherein
the selecting of the reference image (S220) comprises:
recognizing at least one object from at least one image among the first image and the second image by performing image segmentation (S710);
determining the main object, based on at least one of a position, a direction, a size, a depth, and a movement of the at least one recognized object (S720); and
selecting the reference image among the first image and the second image, based on the position information in which the main object is arranged in the image (S730).

13. The method of claim 12, wherein
the selecting of the reference image (S220) comprises,
when the main object is positioned to be biased in a first direction with respect to a center of the image, selecting, as the reference image, an image in which the main object is arranged closest to the center of the image among the first image and the second image, and
the obtaining of the synthesized image (S240) comprises
obtaining the synthesized image by shifting and synthesizing an object in the synthesis target image in a second direction opposite to the first direction so as to allow an object comprised in the reference image and an object comprised in the synthesized image to have a disparity corresponding to the second baseline.

14. The method of any one of claims 9 to 13, wherein
the obtaining of the synthesized image (S240) comprises
obtaining a first synthesized image by performing view synthesis by shifting the object comprised in the synthesis target image in the first direction so as to allow the object to have a depth value according to the disparity corresponding to the second baseline, and obtaining a second synthesized image by performing view synthesis by shifting the object comprised in the reference image in the second direction opposite to the first direction.

15. The method of claim 14, wherein
a first distance by which the object in the synthesis target image is shifted in the first direction is greater than a second distance by which the object in the reference image is shifted in the second direction.
